# EUROPEAN PATENT SPECIFICATION

(11) **EP 4 478 830 B1**
(45) Date of publication and mention of the grant of the patent: **30.09.2026**
(21) Application number: 23753081.1
(22) Date of filing: 03.02.2023
(51) Int. Cl.: H04W 12/041, H04W 36/00, H04W 12/108

(54) **SDT-RELATED COMMUNICATION**
SDT-BEZOGENE KOMMUNIKATION
COMMUNICATION ASSOCIÉE À UNE SDT

(30) Priority: 11.02.2022 KR 20220018417
(43) Date of publication of application: 18.12.2024
(73) Proprietor: LG Electronics Inc., Yeongdeungpo-gu Seoul 07336 (KR)
(72) Inventor: KIM, Seokjung, Seoul 06772 (KR); BYUN, Daewook, Seoul 06772 (KR)
(74) Representative: Plasseraud IP
(86) International application number: PCT/KR2023/001621
(87) International publication number: WO 2023/153731

(56) References cited:
- WO-A1-2020/189958
- KR-A- 20180 055 914
- US-A1- 2019 289 661
- US-A1- 2020 351 723
- HUAWEI ET AL: "Non-SDT data arrival", vol. RAN WG2, no. Online; 20211101 - 20211112, 22 October 2021 (2021-10-22), XP052067042, Retrieved from the Internet <URL:https://ftp.3gpp.org/tsg_ran/WG2_RL2/TSGR2_116-e/Docs/R2-2110596.zip R2-2110596_Non-SDT_data_arrival.docx> [retrieved on 20211022]
- HUAWEI ET AL: "Small data transmission with RA-based schemes", vol. RAN WG2, no. E-meeting; 20210809 - 20210827, 6 August 2021 (2021-08-06), XP052034683, Retrieved from the Internet <URL:https://ftp.3gpp.org/tsg_ran/WG2_RL2/TSGR2_115-e/Docs/R2-2108199.zip R2-2108199_Small_data_transmission_with_RA-based_scheme.docx> [retrieved on 20210806]
- CATT ET AL: "(TP for SDT BL CR 38.300) Handling of non-SDT during SDT transmission", vol. RAN WG3, no. Online; 20220117 - 20220126, 7 January 2022 (2022-01-07), XP052099184, Retrieved from the Internet <URL:https://ftp.3gpp.org/tsg_ran/WG3_Iu/TSGR3_114bis-e/Docs/R3-220722.zip R3-220722 (TP for SDT BL CR 38.300) Handling of non-SDT during SDT transmission.docx> [retrieved on 20220107]
- "3 Generation Partnership Project; Technical Specification Group Radio Access Network; NG-RAN; Xn application protocol (XnAP) (Release 16)", 3GPP STANDARD; TECHNICAL SPECIFICATION; 3GPP TS 38.423, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V16.8.0, 23 December 2021 (2021-12-23), Mobile Competence Centre ; 650, route des Lucioles ; F-06921 Sophia-Antipolis Cedex ; France, pages 1 - 467, XP052083431
- LATHEEF FASIL ABDUL; INGALE MANGESH ABHIMANYU: "On the UE Context Retrieval Enhancements for Improved Inter-RAT Mobility", 2020 IEEE 3RD 5G WORLD FORUM (5GWF), IEEE, 10 September 2020 (2020-09-10), pages 324 - 329, XP033840502, DOI: 10.1109/5GWF49715.2020.9221422

## Description

### TECHNICAL FIELD

The present disclosure relates to mobile communication.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type- communications (mMTC), ultra-reliable and low latency communications (URLLC), etc. The NR shall be inherently forward compatible.

Small Data Transmission (SDT), which is used for transmitting small amounts of data while the terminal remains RRC INACTIVE, is being discussed. During the SDT is being performed, the terminal may have non-SDT bearer data. In this case, the terminal may interrupt SDT and start the process of transitioning to RRC_CONNECTED state in order to deliver the non-SDT bearer data to the network. While the SDT process is in progress, a method to support the transmission of non-SDT data is required.

HUAWEI ET AL., "Non-SDT data arrival", 3GPP Draft R2-2110596, 3rd Generation Partnership Project (3GPP), RAN WG2 Meeting #116, online, 1-12 November 2021, XP052067042, relates to handling the arrival of non-SDT data while a UE is in the middle of an SDT procedure.

HUAWEI ET AL., "Small data transmission with RA-based schemes", 3GPP Draft R2-2108199, 3rd Generation Partnership Project (3GPP), RAN WG2 Meeting #115-e, 9-27 August 2021, XP052034683, concerns small data transmission using random-access-based schemes, including procedures without UE context relocation.

Document WO 2020/189958 A1 (LG ELECTRONICS INC.), published on 24 September 2020, discloses a method and apparatus for small data transmission without a path switch procedure, in which a new gNB may receive information from a last serving gNB while the UE is in an inactive state.

### DESCRIPTION

### TECHNICAL SOLUTION

The object of the invention is achieved by the subject-matter of the independent claims. Advantageous embodiments are defined in the dependent claims. In the present description and drawings, any examples and technical descriptions of apparatuses, products and/or methods which are not covered by the claims should be taken as background art or examples useful for understanding the disclosure.

### BRIEF DESCRIPTION OF THE DRAWINGS

FIG. 1 shows an example of a communication system to which implementations of the present disclosure is applied.
FIG. 2 shows an example of a wireless device to which implementations of the present disclosure is applied.
FIG. 3 shows an example of a wireless device to which implementations of the present disclosure is applied.
FIG. 4 shows an example of a network node to which implementations of the present disclosure is applied.
FIG. 5 shows an example of 5G system architecture to which implementations of the present disclosure is applied.
FIGS. 6a and 6b illustrate one example of a procedure related to the SDT of the present disclosure.
FIGS. 7a and 7b illustrate a signal flow diagram according to the first example of the first part of the present disclosure.
FIGS. 8a and 8b illustrate signal flow diagrams according to a second example of the first example of the present disclosure.
FIGS. 9a and 9b illustrate signal flow diagrams according to a third example of the first example of the present disclosure.
FIGS. 10a and 10b illustrate signal flow diagrams according to a second example of the present disclosure.
FIG. 11 illustrates signal flow diagrams according to a fourth example of the present disclosure.

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

In the attached drawings, user equipments (UEs) are shown for example. The UE may also be denoted a terminal or mobile equipment (ME). In addition, the UE may be a laptop computer, a mobile phone, a PDA, a smartphone, a multimedia device, or other portable device, or may be a stationary device such as a PC or a car mounted device.

Hereinafter, the UE is used as an example of a wireless communication device (or a wireless apparatus, or a wireless device) capable of wireless communication. An operation performed by the UE may be performed by a wireless communication device. A wireless communication device may also be referred to as a wireless apparatus, a wireless device, or the like. Hereinafter, AMF may mean an AMF node, SMF may mean an SMF node, and UPF may mean a UPF node.

The term "base station" used hereinafter generally refers to a fixed station that communicates with a wireless device and may be denoted by other terms such as evolved-NodeB (eNodeB), evolved-NodeB (eNB), Base Transceiver System (BTS), access point, or Next generation NodeB (gNB).

### I. Techniques and procedures applicable to the disclosure of the present specification

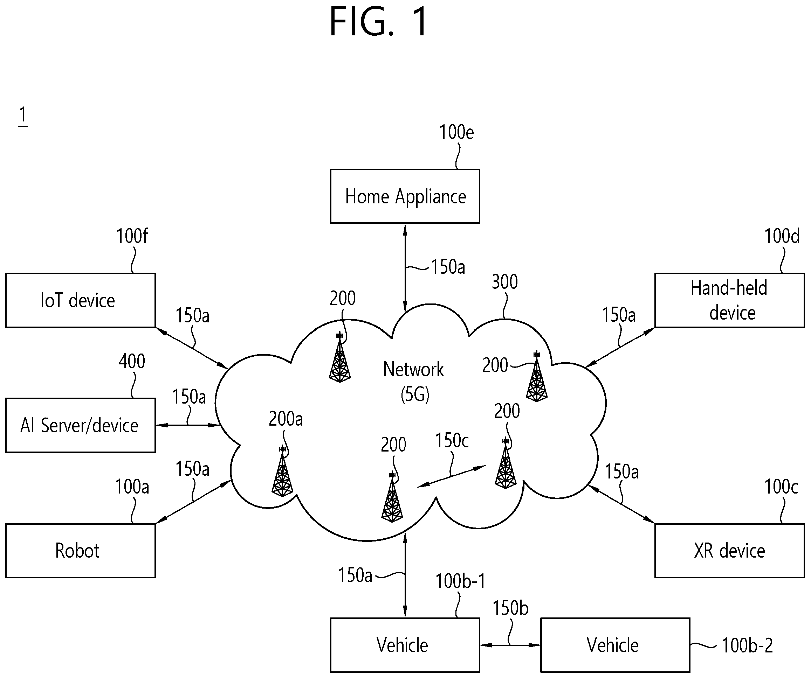

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Partial use cases may require a plurality of categories for optimization and other use cases may focus only upon one key performance indicator (KPI). 5G supports such various use cases using a flexible and reliable method.

eMBB far surpasses basic mobile Internet access and covers abundant bidirectional work and media and entertainment applications in cloud and augmented reality. Data is one of 5G core motive forces and, in a 5G era, a dedicated voice service may not be provided for the first time. In 5G, it is expected that voice will be simply processed as an application program using data connection provided by a communication system. Main causes for increased traffic volume are due to an increase in the size of content and an increase in the number of applications requiring high data transmission rate. A streaming service (of audio and video), conversational video, and mobile Internet access will be more widely used as more devices are connected to the Internet. These many application programs require connectivity of an always turned-on state in order to push real-time information and alarm for users. Cloud storage and applications are rapidly increasing in a mobile communication platform and may be applied to both work and entertainment. The cloud storage is a special use case which accelerates growth of uplink data transmission rate. 5G is also used for remote work of cloud. When a tactile interface is used, 5G demands much lower end-to-end latency to maintain user good experience. Entertainment, for example, cloud gaming and video streaming, is another core element which increases demand for mobile broadband capability. Entertainment is essential for a smartphone and a tablet in any place including high mobility environments such as a train, a vehicle, and an airplane. Other use cases are augmented reality for entertainment and information search. In this case, the augmented reality requires very low latency and instantaneous data volume.

In addition, one of the most expected 5G use cases relates a function capable of smoothly connecting embedded sensors in all fields, i.e., mMTC. It is expected that the number of potential Internet-of-things (IoT) devices will reach 204 hundred million up to the year of 2020. An industrial IoT is one of categories of performing a main role enabling a smart city, asset tracking, smart utility, agriculture, and security infrastructure through 5G.

URLLC includes a new service that will change industry through remote control of main infrastructure and an ultra-reliable/available low-latency link such as a self-driving vehicle. A level of reliability and latency is essential to control a smart grid, automatize industry, achieve robotics, and control and adjust a drone.

5G is a means of providing streaming evaluated as a few hundred megabits per second to gigabits per second and may complement fiber-to-the-home (FTTH) and cable-based broadband (or DOCSIS). Such fast speed is needed to deliver TV in resolution of 4K or more (6K, 8K, and more), as well as virtual reality and augmented reality. Virtual reality (VR) and augmented reality (AR) applications include almost immersive sports games. A specific application program may require a special network configuration. For example, for VR games, gaming companies need to incorporate a core server into an edge network server of a network operator in order to minimize latency.

Automotive is expected to be a new important motivated force in 5G together with many use cases for mobile communication for vehicles. For example, entertainment for passengers requires high simultaneous capacity and mobile broadband with high mobility. This is because future users continue to expect connection of high quality regardless of their locations and speeds. Another use case of an automotive field is an AR dashboard. The AR dashboard causes a driver to identify an object in the dark in addition to an object seen from a front window and displays a distance from the object and a movement of the object by overlapping information talking to the driver. In the future, a wireless module enables communication between vehicles, information exchange between a vehicle and supporting infrastructure, and information exchange between a vehicle and other connected devices (e.g., devices accompanied by a pedestrian). A safety system guides alternative courses of a behavior so that a driver may drive more safely drive, thereby lowering the danger of an accident. The next stage will be a remotely controlled or self-driven vehicle. This requires very high reliability and very fast communication between different self-driven vehicles and between a vehicle and infrastructure. In the future, a self-driven vehicle will perform all driving activities and a driver will focus only upon abnormal traffic that the vehicle cannot identify. Technical requirements of a self-driven vehicle demand ultra-low latency and ultra-high reliability so that traffic safety is increased to a level that cannot be achieved by human being.

A smart city and a smart home/building mentioned as a smart society will be embedded in a high-density wireless sensor network. A distributed network of an intelligent sensor will identify conditions for costs and energy-efficient maintenance of a city or a home. Similar configurations may be performed for respective households. All of temperature sensors, window and heating controllers, burglar alarms, and home appliances are wirelessly connected. Many of these sensors are typically low in data transmission rate, power, and cost. However, real-time HD video may be demanded by a specific type of device to perform monitoring.

Consumption and distribution of energy including heat or gas is distributed at a higher level so that automated control of the distribution sensor network is demanded. The smart grid collects information and connects the sensors to each other using digital information and communication technology so as to act according to the collected information. Since this information may include behaviors of a supply company and a consumer, the smart grid may improve distribution of fuels such as electricity by a method having efficiency, reliability, economic feasibility, production sustainability, and automation. The smart grid may also be regarded as another sensor network having low latency.

Mission critical application (e.g., e-health) is one of 5G use scenarios. A health part includes many application programs capable of enjoying benefit of mobile communication. A communication system may support remote treatment that provides clinical treatment in a faraway place. Remote treatment may aid in reducing a barrier against distance and improve access to medical services that cannot be continuously available in a faraway rural area. Remote treatment is also used to perform important treatment and save lives in an emergency situation. The wireless sensor network based on mobile communication may provide remote monitoring and sensors for parameters such as heart rate and blood pressure.

Wireless and mobile communication gradually becomes important in the field of an industrial application. Wiring is high in installation and maintenance cost. Therefore, a possibility of replacing a cable with reconstructible wireless links is an attractive opportunity in many industrial fields. However, in order to achieve this replacement, it is necessary for wireless connection to be established with latency, reliability, and capacity similar to those of the cable and management of wireless connection needs to be simplified. Low latency and a very low error probability are new requirements when connection to 5G is needed.

Logistics and freight tracking are important use cases for mobile communication that enables inventory and package tracking anywhere using a location-based information system. The use cases of logistics and freight typically demand low data rate but require location information with a wide range and reliability.

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make selfdetermination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | | Corresponding frequency range | | Subcarrier Spacing |
|---|---|---|---|---|
| FR1 | 450MHz - 6000MHz | | 15, 30, 60kHz | |
| FR2 | 24250MHz - 52600MHz | | 60, 120, 240kHz | |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally, and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally, and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

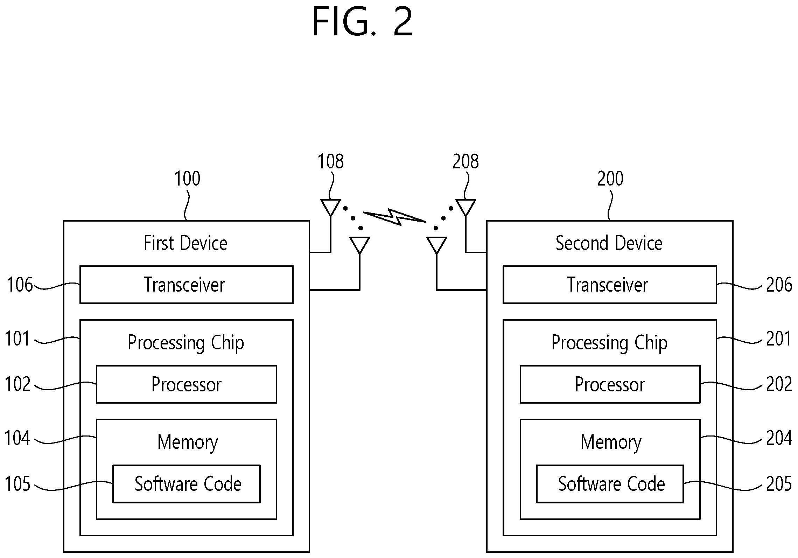

**FIG. 2** **shows an example of wireless devices to which implementations of the present disclosure is applied.**

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/or alternatively, the memory 104 may be placed outside of the processing chip 101.

The processor 102 may control the memory 104 and/or the transceiver 106 and may be configured to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with radio frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/or alternatively, the memory 204 may be placed outside of the processing chip 201.

The processor 202 may control the memory 204 and/or the transceiver 206 and may be configured to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, suggestions, methods and/or operational flowcharts disclosed in the present disclosure may be implemented using firmware or software and the firmware or software may be configured to include the modules, procedures, or functions. Firmware or software configured to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be configured to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be configured to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

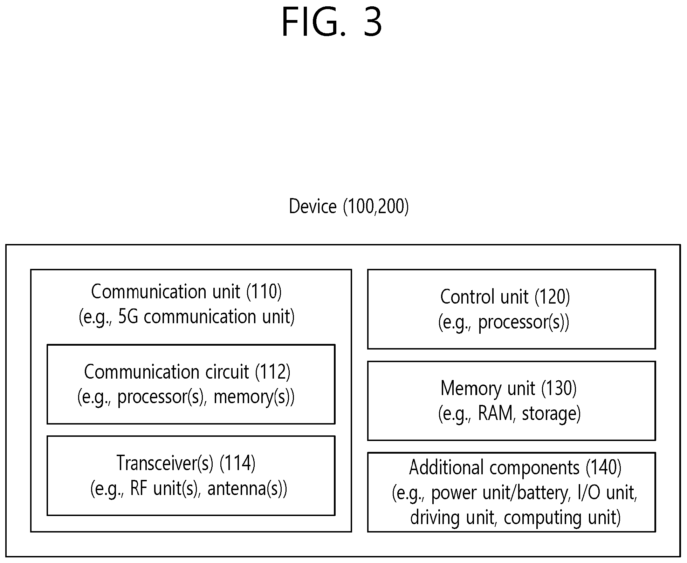

**FIG. 3** **shows an example of a wireless device to which implementations of the present disclosure is applied.**

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory unit 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory unit 130 may be configured by a RAM, a DRAM, a ROM, a flash memory, a volatile memory, a non-volatile memory, and/or a combination thereof.

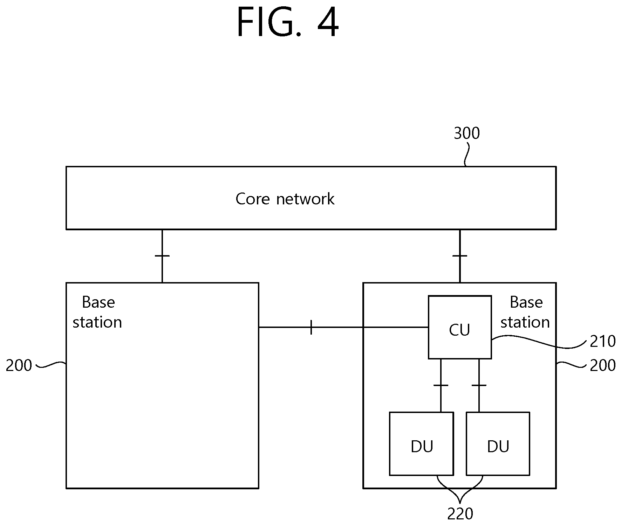

**FIG. 4** **shows an example of a network node to which implementations of the present disclosure is applied.**

FIG. 4 is a diagram illustrating the second wireless device 200 of FIG. 2 or the wireless device 200 of FIG. 3 described above in more detail, when the base station is divided into a central unit (CU) and a distributed unit (DU).

Referring to FIG. 4, base station 200 may be connected to core network 300. Base stations 200 may be connected to each other. For example, an interface between the base station 200 and the core network 300 may be referred to as NG. For example, an interface between base stations 200 may be referred to as Xn.

Base station 200 may be divided into CU 210 and DU 220. That is, base station 200 may be hierarchically separated and operated. CU 210 may be connected to one or more DUs 220. For example, an interface between the CU 210 and the DU 220 may be referred to as F1. The CU 210 may perform a function of upper layers of the base station 200, and the DU 220 may perform a function of lower layers of the base station 200. For example, the CU 210 may be a logical node hosting RRC, SDAP, and PDCP layers of the base station 200 (e.g., gNB). Alternatively, the CU (W32) may be a logical node hosting the RRC and PDCP layers of the base station 200 (e.g., ng-eNB). For example, DU 220 may be a logical node hosting the RLC, MAC and PHY layers of the base station.

The operation of DU 220 may be partially controlled by CU 210. One DU 220 may support one or more cells. One cell may be supported by only one DU 220. One DU 220 may be connected to one CU 210, and one DU 220 may be connected to a plurality of CUs 210 according to appropriate implementation.

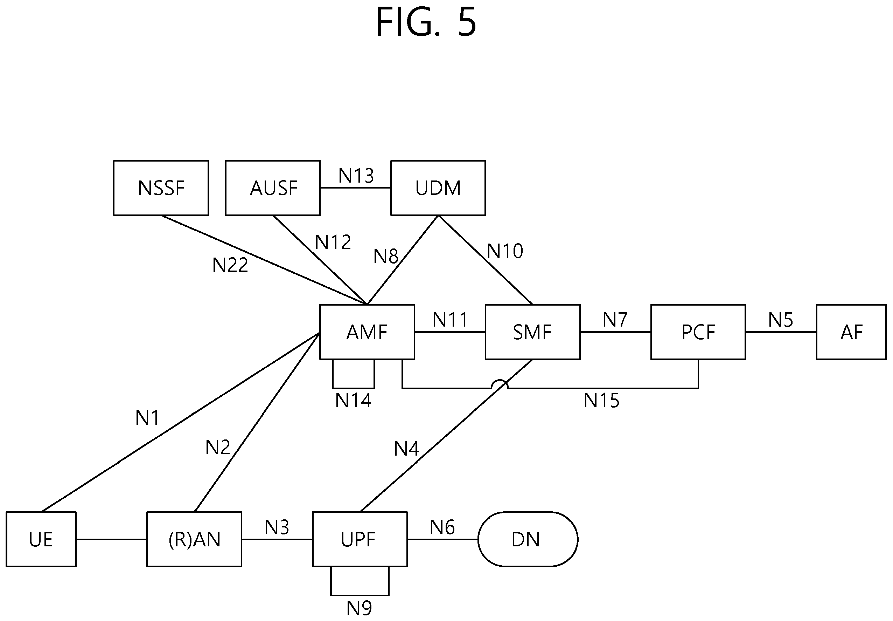

**FIG. 5** **shows an example of 5G system architecture to which implementations of the present disclosure is applied.**

The 5G system (5GS) architecture consists of the following network functions (NF).
- Authentication Server Function (AUSF)
- Access and Mobility Management Function (AMF)
- Data Network (DN), e.g., operator services, Internet access or 3rd party services
- Unstructured Data Storage Function (UDSF)
- Network Exposure Function (NEF)
- Intermediate NEF (I-NEF)
- Network Repository Function (NRF)
- Network Slice Selection Function (NSSF)
- Policy Control Function (PCF)
- Session Management Function (SMF)
- Unified Data Management (UDM)
- Unified Data Repository (UDR)
- User Plane Function (UPF)
- UE radio Capability Management Function (UCMF)
- Application Function (AF)
- User Equipment (UE)
- (Radio) Access Network ((R)AN)
- 5G-Equipment Identity Register (5G-EIR)
- Network Data Analytics Function (NWDAF)
- CHarging Function (CHF)

Furthermore, the following network functions may be considered.
- Non-3GPP InterWorking Function (N3IWF)
- Trusted Non-3GPP Gateway Function (TNGF)
- Wireline Access Gateway Function (W-AGF)

FIG. 5 depicts the 5G system architecture in the non-roaming case, using the reference point representation showing how various network functions interact with each other.

In FIG. 5, for the sake of clarity of the point-to-point diagrams, the UDSF, NEF and NRF have not been depicted. However, all depicted Network Functions can interact with the UDSF, UDR, NEF and NRF as necessary.

For clarity, the UDR and its connections with other NFs, e.g., PCF, are not depicted in FIG. 5. For clarity, the NWDAF and its connections with other NFs, e.g., PCF, are not depicted in FIG. 5.

The 5G system architecture includes the following reference points:
- N1: Reference point between the UE and the AMF.
- N2: Reference point between the (R)AN and the AMF.
- N3: Reference point between the (R)AN and the UPF.
- N4: Reference point between the SMF and the UPF.
- N6: Reference point between the UPF and a Data Network.
- N9: Reference point between two UPFs.

The following reference points show the interactions that exist between the NF services in the NFs.
- N5: Reference point between the PCF and an AF.
- N7: Reference point between the SMF and the PCF.
- N8: Reference point between the UDM and the AMF.
- N10: Reference point between the UDM and the SMF.
- N11: Reference point between the AMF and the SMF.
- N12: Reference point between the AMF and the AUSF.
- N13: Reference point between the UDM and the AUSF.
- N14: Reference point between two AMFs.
- N15: represents a reference point between PCF and AMF, and a reference point between AMF and PCF of a visited network in a roaming scenario.
- N16: Reference point between two SMFs, (in roaming case between SMF in the visited network and the SMF in the home network).
- N22: Reference point between the AMF and the NSSF.
- N30: Reference point between PCF and NEF.
- N33: Reference point between AF and NEF.

In some cases, a couple of NFs may need to be associated with each other to serve a UE.

For reference, in FIG. 5, an AF by a third party other than an operator may be connected to 5GC through NEF.

### <Connection Management (CM)>

The CM is used to establish or release a signaling connection between the UE and the AMF. For example, the CM includes the function of establishing and releasing the NAS signaling connection between the UE and the AMF through the N1 reference point. The NAS signaling connection enables NAS signaling exchange between the UE and the core network.

NAS signaling connection may include AN signaling connection (RRC connection over 3GPP access or connection between UE and N3IWF over non-3GPP access) between AN (Access Network) and UE and N2 connection for UE between AN and AMF.

The two CM states are used to reflect the NAS signaling connection between the UE and the AMF. The two CM states are:
- CM-IDLE
- CM-CONNECTED

The CM status for 3GPP access and the CM status for non-3GPP access may be independent of each other. For example, the UE may be in a CM-IDLE state for 3GPP access and a CM-CONNECTED state for non-3GPP access.

Hereinafter, the CM-IDLE state, the CM-CONNECTED state, and the transition between the CM-IDLE state and the CM-CONNECTED state will be described.

### 1. CM-IDLE state

The UE in the CM-IDLE state does not have a NAS signaling connection with the AMF through the N1 interface. The UE may perform a cell selection or cell reselection procedure and a PLMN selection procedure.

For a UE in CM-IDLE state, there are no AN signaling connections, N2 connections and N3 connections. When the UE is in the CM-IDLE state and the RM (Registration Management)-REGISTERED state, the UE may perform the following operations:
- As long as the UE is not in Mobile Initiated Connection Only (MICO) mode, the UE may respond to paging by performing a service request procedure.
- When the UE has uplink signaling or user data to transmit, it may perform a service request procedure.

If the UE state in the AMF is RM-REGISTERED, UE information for initiating communication with the UE may be stored in the AMF. The AMF may use 5G-GUTI (Globally Unique Temporary Identifier) to retrieve stored information required to initiate communication with the UE.

The UE may provide 5G-Short-Temporary Mobile Subscriber Identity (5G-S-TMSI) as a part of AN parameters while performing a procedure for AN signaling connection establishment. Whenever an AN signaling connection is established between the UE and the AN (when entering the RRC Connected state through 3GPP access, or when establishing a connection between the UE and N3IWF through non-3GPP access), the UE may enter the CM-CONNECTED state.

Transmission of the Initial NAS message initiates the transition from the CM-IDLE state to the CM-CONNECTED state. Here, the initial NAS message may be, for example, a registration request message, a service request message, or a deregistration request message.

If the UE state in the AMF is CM-IDLE and RM-REGISTERED, the AMF may perform the following operation:
- When the AMF has mobile-terminated data or signaling to be transmitted to the UE, the AMF may perform a network triggered Service Request procedure by transmitting a paging request message to the UE. AMF may perform the network initiation service request procedure, except when the UE cannot respond due to MICO mode or mobility restrictions.

Whenever an N2 connection is established between the AN and the AMF for the UE, the AMF may enter the CM-CONNECTED state for the UE. Reception of the initial N2 message (eg, N2 INITIAL UE MESSAGE) initiates the transition from the CM-IDLE state to the CM-CONNECTED state in the AMF.

When the UE and the AMF are in the CM-IDLE state, for example, by activating the MICO mode, power efficiency and signaling efficiency may be optimized.

### 2. CM-CONNECTED state

The UE in the CM-CONNECTED state has a signaling connection with the AMF through the N1 reference point. NAS signaling connection may use RRC connection between UE and NG-RAN and New Generation Application Protocol (NGAP) UE association between AN and AMF for 3GPP (NGAP UE association). The UE may be in a CM-CONNECTED state with an NGAP UE association that is not bound to any TNLA (Transport Network Layer Association) between the AN and the AMF. When the NAS signaling procedure is completed, the AMF may decide to release the NAS signaling connection with the UE.

In the CM-CONNECTED state, the UE may perform the following operations:
- whenever the AN signaling connection is released (for example, when entering RRC Idle state via 3GPP access, or when it is detected by the UE that the connection between the UE and N3IWF via non-3GPP access is disconnected), the UE may enter the CM-IDLE state.

When the UE CM state in the AMF is the CM-CONNECTED state, the AMF may perform the following operations:
- When the AN release procedure is completed, if the logical NGAP signaling connection for the UE and the N3 user plane connection are released, the AMF may enter the CM-IDLE state for the UE.

Until the UE is de-registered from the core network, the AMF may maintain the UE CM state in the AMF in the CM-CONNECTED state.

The UE in the CM-CONNECTED state may be in the RRC deactivation state. If the UE is in RRC deactivation state, the following applies:
- UE reachability is managed by the RAN, along with assistance information from the core network,
- UE paging is managed by the RAN.
- The UE manages paging using the UE's CN (5G-S-TMSI) and RAN identifier

### 3. Transition between CM-IDLE state and CM-CONNECTED state

Based on the above description of the CM-IDLE state and the description of the CM-CONNECTED state, an example of transition between the CM-IDLE state and the CM-CONNECTED state will be described.

When the CM state in the UE is the CM-IDLE state, when the AN signaling connection is established (eg, when the UE transmits an initial NAS message), the CM state is switched to the CM-CONNECTED state. If the CM state in the UE is in the CM-CONNECTED state, when the AN signaling connection is released, the CM state is changed to the CM-IDLE state.

If the CM state for the UE in the AMF is the CM-IDLE state, when the N2 context is established, the CM state is switched to the CM-CONNECTED state. If the CM state for the UE in the AMF is the CM-CONNECTED state, when the N2 context is released, the CM state is switched to the CM-IDLE state.

### <RRC state>

In LTE, RRC state includes RRC_IDLE state and RRC_CONNECTED state. In 5G, the RRC state may include an RRC_IDLE state, an RRC_CONNECTED state, and an RRC_INACTIVE state. That is, the RRC_INACTIVE state is newly defined in 5G.

The RRC_INACTIVE state may mean an RRC state in which the UE (eg, UE) is a Connected state in the core network, but is an IDLE state in radio aspect between the UE and the NG-RAN. For example, when the terminal is in the RRC_INACTIVE state, the terminal is in a state in which the RRC connection is released from the side of the radio, the terminal is in the MM (Mobility Management)-REGISTERED state, and in the CM (Connection Management)_CONNECTED state from the side of the core network.

When the RRC_INACTIVE state is used, when the terminal is switched from the RRC_INACTIVE state to the RRC_CONNECTED state, the core can provide a connection to the terminal quickly without the need for signaling that occurs when transitioning to the CONNECTED state. In addition, in radio aspect between the terminal and the NG-RAN, radio resources can be prevented from being wasted unnecessarily, so that radio resources can be efficiently used.

### II. Disclosure of the Present Specification

The disclosures described in the present specification may be implemented in one or more combinations (e.g., combinations that include at least one of those described below). While each of the drawings illustrates an embodiment of each disclosure, the embodiments of the drawings may be implemented in combination with each other.

The disclosure of the present specification may comprise any combination of one or more of the actions/compositions/steps described below. The following methods described below may be performed or used combinatorially or complementarily.

Small Data Transmission (SDT), which is used for transmitting small amounts of data while the terminal remains RRC INACTIVE, is being discussed. During the SDT is being performed, the terminal may have non-SDT bearer data. In this case, the terminal may interrupt SDT and start the process of transitioning to RRC_CONNECTED state in order to deliver the non-SDT bearer data to the network. While the SDT process is in progress, a method to support the transmission of non-SDT data is required.

For example, while the terminal is RRC inactive and utilizing SDT services, the terminal may enter the coverage of a new NG-RAN. When the terminal needs to transmit non-SDT data, the terminal sends an RRC resume request to the new NG-RAN. At this time, it is unclear how to verify the resume MAC-I of the terminal. In addition, there is no way for the new NG-RAN to discover the UE context, so it is necessary for the new NG-RAN to utilize the existing UE context.

For example, in the middle of utilizing SDT, the terminal may stop SDT and again send an RRC Resume Request message to inform the network of the occurrence of non-SDT data. Since both the old NG-RAN and the new NG-RAN have the UE context for the terminal, it is not clear which NG-RAN will validate the Resume MAC-I included in the RRC message sent by the terminal. If the old NG-RAN validates the Resume MAC-I for the terminal, it should inform the new NG-RAN that the UE verification has passed. Also, there needs to be a way for the old NG-RAN to communicate to the new NG-RAN the new security Key KgNB* value that the terminal will use in the RRC_CONNECTED state.

Also, for example, the new NG-RAN may have already finished the Path Switch Request process with the AMF during the SDT process. In this case, the old NG-RAN needs a way to pass only some context to the new NG-RAN, since the new NG-RAN may have updated or released some parameter values related to the UE as directed by the AMF.

Also, for example, the new NG-RAN already receives the UE context from the old NG-RAN during the SDT process. However, there is no way for the new NG-RAN to find the existing UE context when the terminal sends the second RRC Resume Request message. Therefore, there is a need for a way for the new NG-RAN to utilize the existing UE context.

For a terminal that is using SDT, UL data related to a non-SDT bearer may occur. In this case, the terminal shall abort the SDT procedure and inform the network that non-SDT data has occurred. It should be discussed whether there are any issues with reusing the conventional resume procedure (i.e. Common Control Channel (CCCH) solution) to notify the network that non-SDT data has occurred.

For the CCCH solution, when data for a non-SDT radio bearer is available, the UE stops the ongoing SDT session before the network sends an RRCRelease message to the UE with the new Inactive Radio Network Temporary Identifier (I-RNTI) or security key information. In this case, the UE may send a second RRCResumeRequest message using the I-RNTI issued by the old anchor gNB and perform horizontal key derivation. In this case, the following issues may occur

For example, it is unclear which node (old anchor gNB or serving gNB) will process the second RRCResumeRequest message with the I-RNTI associated with the old anchor gNB and perform the ResumeMAC-I verification and key derivation. Note that in various examples of the present disclosure, old anchor gNB may be used interchangeably with old NG-RAN or old RAN. Also, a serving gNB may be used as a term with the same meaning as new NG-RAN or new RAN.

In another example, it is unclear whether the previous anchor gNB and/or serving gNB can distinguish the second RRCResumeRequest message from the explicit indication sent by the UE.

These issues require discussion, such as the example below.

The Small Data Transmission (SDT) feature is being studied to allow small data transmission while the UE is INACTIVE. It may be necessary for the UE to transmit UL data over a radio bearer configured for SDT. In this case, an SDT procedure may be initiated to send and receive data over the radio bearer configured for SDT, and multiple DL and UL packets may be exchanged during the SDT session. When the SDT procedure is initiated, an RRCResumeRequest is sent as part of the first UL transmission by the UE along with the UL SDT data. The UE uses the stored Next Hop Chaining Counter (NCC) value to generate the security key when generating this first RRCResumeRequest (i.e. the same as the legacy resume procedure).

The SDT procedure is supported with or without anchor relocation. If anchor relocation is performed, the target gNB gets the UE context from the previous anchor gNB. In this case, the PDCP layer is terminated on the target gNB and a path switch procedure is performed before user data is encoded/decoded. If there is no anchor relocation, the previous anchor gNB terminates the PDCP layer and the path switch procedure is not performed.

During the SDT procedure, new UL data may appear in the buffer of a radio bearer that is not set up for SDT. The UE may initiate a procedure to indicate this non-SDT data arrival to the network. In order for the UE to send the indication to the network, the UE may terminate the ongoing SDT procedure and trigger a new RRC resumption procedure. In this case, the UE may send a second RRCResumeRequest to the network.

In this case, solutions to prevent the reuse of the Resume Message Authentication Code - Integrity (resumeMAC-I) were further discussed. One option discussed is to use the key derived when the UE initiates the SDT procedure to generate the resumeMAC-I for the second RRCResumeRequest sent in the second RRC resume procedure for the display of non-SDT data. The C-RNTI input to the resumeMAC-I calculation is the C-RNTI that the UE had on the PCell to which it was connected before the RRC connection was interrupted (i.e. the same approach as in the conventional resume procedure). After that, the UE performs a horizontal key derivation to obtain the key to be used in subsequent messages exchanged with the network. In this solution, the same I-RNTI used in the first RRCResumeRequest is reused to send the second RRCResumeRequest. Therefore, in case of path switching, an option is being discussed where the old anchor gNB uses the key used by the destination gNB (i.e. KRRCint_1 in the figure below) to validate the UE, in order to protect the integrity of the message.

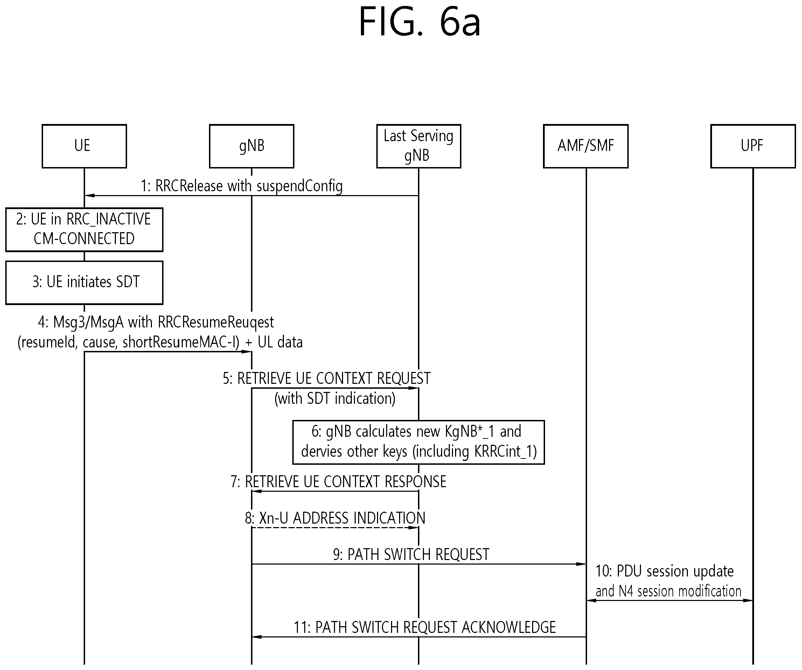

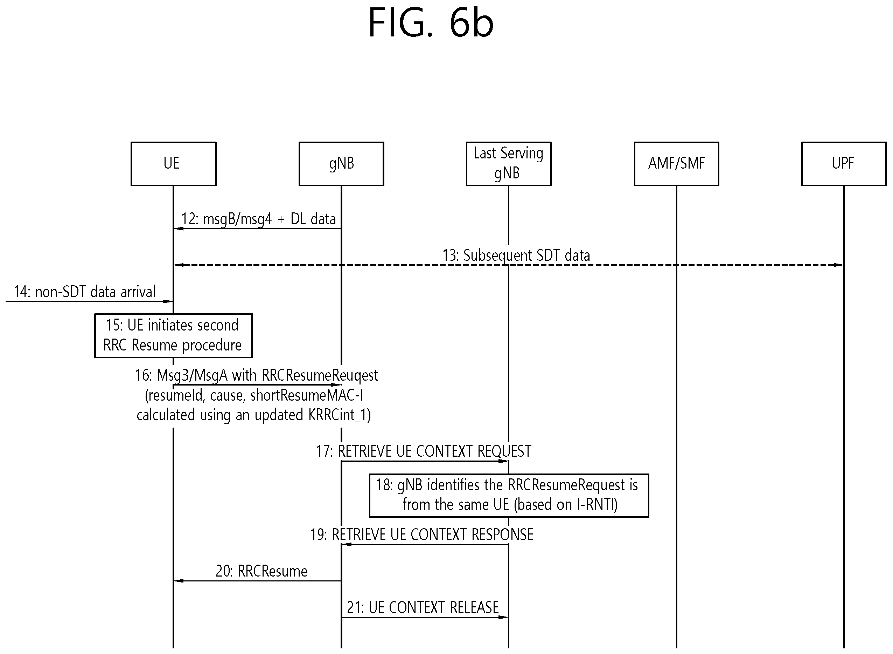

An exemplary call flow to facilitate understanding of the procedure following the example described above is shown in FIG. 6a and FIG. 6b.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIGS. 6a** **and** **6b** **illustrate one example of a procedure related to the SDT of the present disclosure.**

In the examples of FIGS. 6a and 6b, a UE, a gNB, a Last Serving gNB (i.e., an old anchor gNB), a UPF, an AMF, and/or an SMF are shown.
1. The Last Serving gNB may send a RRCRelease message with suspendConfig.
2. The UE can be in RRC_INACTIVE state and CM-CONNECTED state.

The UE may initiate the SDT. The UE may then calculate the resume MAC-I using the stored KRRCint_0. For reference, KRRCint is a key derived by the Mobile Equipment (ME) (or UE) and the gNB from the KgNB and is used for RRC signal protection using a specific integrity algorithm. Here KRRCint_0 is the KRRCint value that the device was storing when it transitioned to RRC_INACTIVE state. Note that resume MAC-I is the authentication token used when the gNB uses UE authentication, which is the value used by the gNB to validate the terminal. The UE can then calculate KgNB*_1. Note that KgNB* can also be referred to as KNG-RAN*. KgNB* or KNG-RAN* can be the key that the ME (or UE) and the NG-RAN (i.e., gNB or ng-eNB) derive when performing horizontal key derivation or vertical key derivation. For example, for the protection of all RRC messages except the RRCReject message after the transmission of the RRCResumeRequest message, the UE may derive the KNG-RAN* using the target PCI, the target Absolute Radio Frequency Channel Number (ARFCN)-DL/EARFCN-DL and the KgNB/NH based on the horizontal key derivation or the vertical key derivation. The UE may then calculate the UP keys and CP keys, including the new KRRCint_1, according to conventional procedures.

4. The UE may send a message (Msg3/MsgA) to the gNB with the RRCResumRequest message. In this case, the UE may also send resumId, cause, shortREsumMAC-I and UL data.

5. The gNB may send a RETRIEVE UE CONTEXT REQUEST message with SDT indication to the Last Serving gNB.

6. The Last Serving gNB can calculate newKgNB*_1 and derive another key including KRRCint_1.

7. The Last Serving gNB may send a RETRIEVE UE CONTEXT RESPONSE message to the gNB.

8. gNB may transmit the Xn-U ADDRESS INDICATION to the Last Serving gNB.

9. The gNB may send a PATH SWITCH REQUEST message to the AMF/SMF.

10. AMF/SMF and UPF may perform PDU session update procedures and N4 session modification procedures.

11. The AMF/SMF may send a PATH SWITCH REQUEST ACKNOWLEDGE message to the gNB.

12. The gNB may transmit msgB/msg4 and DL data to UE.

13. Subsequent SDT data may be transmitted and received between the UE and the UPF.

14. non-SDT data may arrive at the UE.

The UE may initiate a second RRC Resume procedure. The UE may use KRRCint_1 and KgNB*_1 to update the UE Inactive AS context. The UE may calculate the resume MAC-I using KRRCint_1. The UE may compute KgNB*2 using horizontal key derivation, according to conventional procedures. The UE may then compute the UP keys and CP keys according to conventional procedures.

16. The UE may send a message (Msg3/MsgA) to the gNB with the RRCResumRequest message. The UE may also send a shortResumMAC-I calculated using the resumId, cause and updated KRRCint_1.

17. The gNB may send a RETRIEVE UE CONTEXT REQUEST message to the Last Serving gNB.

18. Based on the I-RNTI, the Last Serving gNB may identify that the RRCResumRequest message was sent from the same UE. The Last Serving gNB may validate the ResumMAC-I based on KRRCint_1 instead of KRRCint_0. The Last Serving gNB may calculate KgNB*2, using horizontal key derivation, in accordance with the prior art.

19. The Last Serving gNB may send a RETRIEVE UE CONTEXT RESPONSE message to the gNB.

20. The gNB may send an RRCResume message to the UE.

21. The gNB may send a UE CONTENT RELEASE message to the Last Serving gNB.

Optionally, it is also being considered that the UE triggers a new RRC resume procedure before receiving the network's response to the first RRCResumeRequest.

While the terminal is attempting SDT, the old NG-RAN that has the UE context may transmit the UE context to the new NG-RAN that the terminal is currently connected to. If non-SDT data occurs to the terminal during the SDT, the terminal may stop the SDT process and resend the RRC Resume Request message to the network. In this case, it is not clear which NG-RAN will validate the Resume MAC-I included in the RRC message, since both the old NG-RAN and the new NG-RAN have the UE context of the terminal. If the old NG-RAN validates the Resume MAC-I for the terminal, it should inform the new NG-RAN that the UE verification has passed. Also, the old NG-RAN needs a way to pass the new NG-RAN the new security Key KgNB* value that the terminal will use in the RRC_CONNECTED state.

In addition, this process may cause problems if the old NG-RAN forwards all the UE context it is currently storing in addition to the security key to the new NG-RAN. This is because if the new NG-RAN has already completed the AMF and Path Switch Request processes during the SDT, some parameter values related to the UE context may have been updated or released. Therefore, the old NG-RAN needs a way to pass only some of the context to the new NG-RAN.

In addition, the new NG-RAN has already received the UE context from the old NG-RAN during the SDT process. At this time, there is no way for the new NG-RAN to find the existing UE context when the terminal sends the second RRC Resume Request message, so a way for the new NG-RAN to utilize the existing UE context is also required.

In the various examples of the present disclosure described below, it is proposed that examples of how an old NG-RAN can notify a new NG-RAN so that the new NG-RAN can transition its terminal to the RRC_CONNECTED state for non-SDT data transmission. It also proposes examples of how an old NG-RAN can pass relevant information to a new NG-RAN so that the new NG-RAN can continue to utilize the UE context it had during the SDT process.

For some of the Xn messages between two NG-RANs described below, a new Xn message may be defined and used. Also, for some of the RRC messages between the NG-RAN and UE described below, a new RRC message may be defined and used.

To support the non-SDT data transmission of the terminal, the old NG-RAN may generate and forward a security key value for the new NG-RAN to use in the RRC_CONNECTED state after completing the verification of the terminal. Also, if the new NG-RAN has already completed Path Switch Request process with the AMF during the SDT process, the old NG-RAN can send an additional indication to the new NG-RAN so that the new NG-RAN does not repeat the process again. In addition, in order for the new NG-RAN to continue to use the UE context used during the SDT process, the old NG-RAN can forward the New NG-RAN UE XnAP ID_1 assigned by the new NG-RAN during the SDT process to the new NG-RAN so that the new NG-RAN can find the existing UE context used during the SDT process.

In the procedures described in the various examples of the present disclosure below, some actions/steps may be performed simultaneously/in parallel, and others may be performed in a different order than the order described in the disclosure.

Hereinafter, the present disclosure will be described with reference to a first example through a fourth example of the present disclosure. Examples 1 through 4 of the disclosure described below may be implemented in combination.

### 1. The first example of the present disclosure

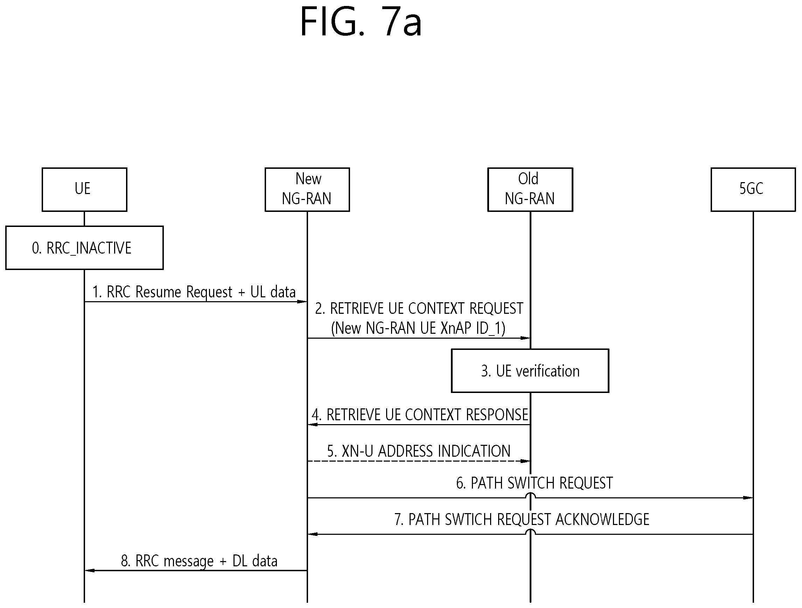

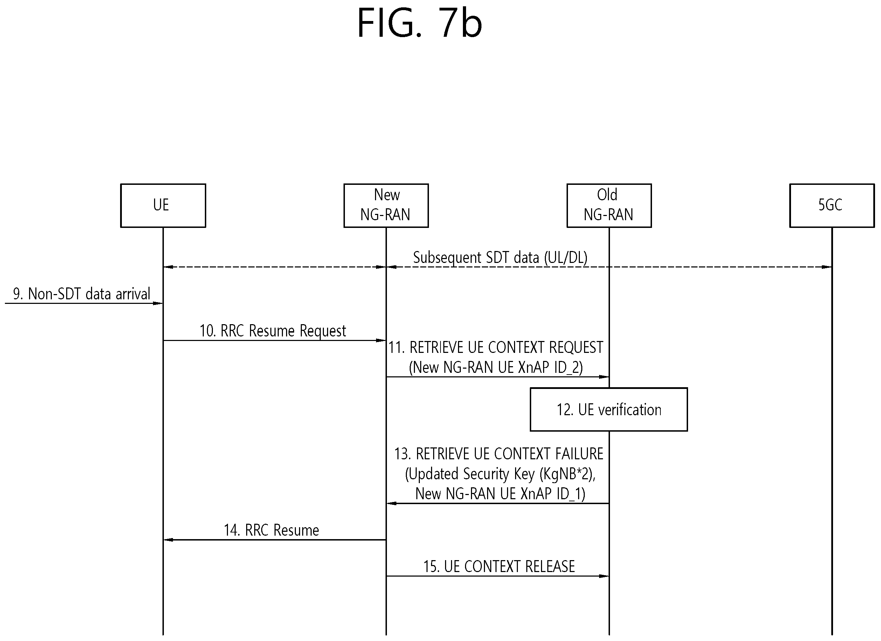

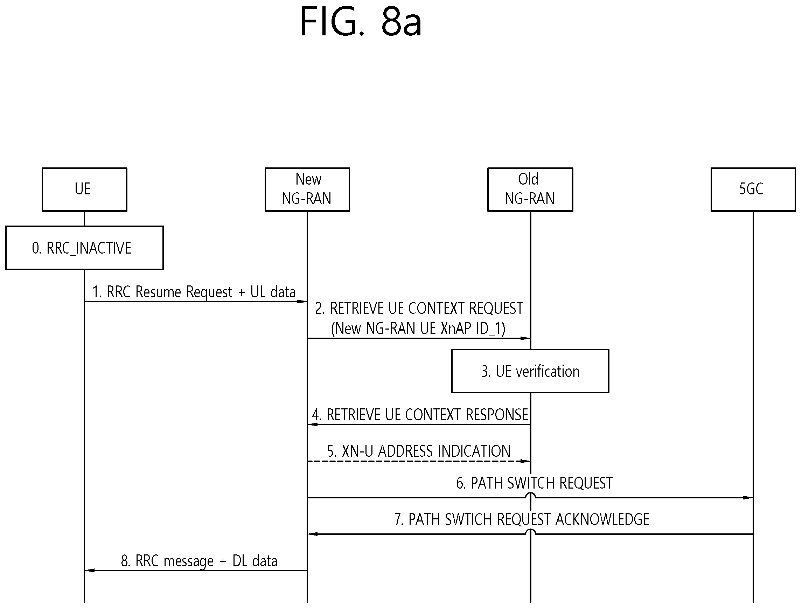

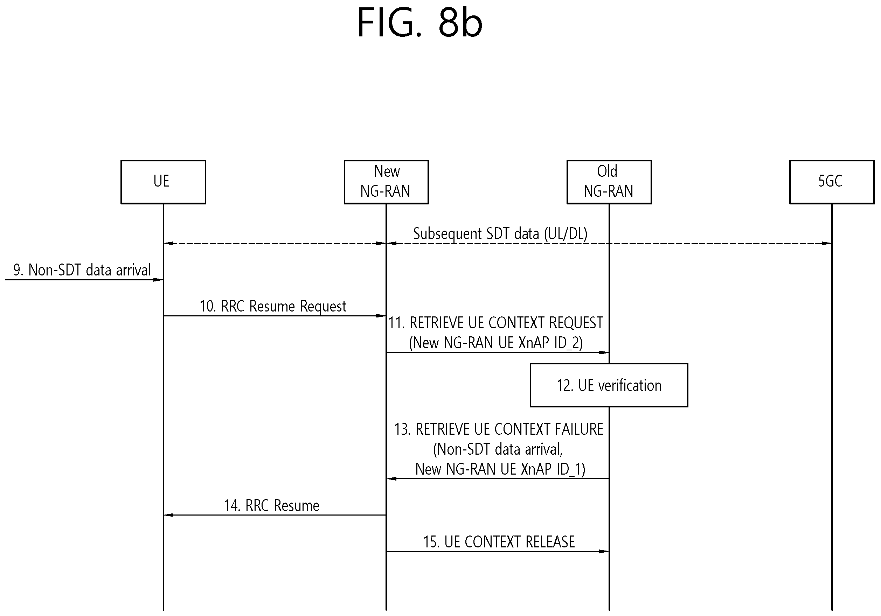

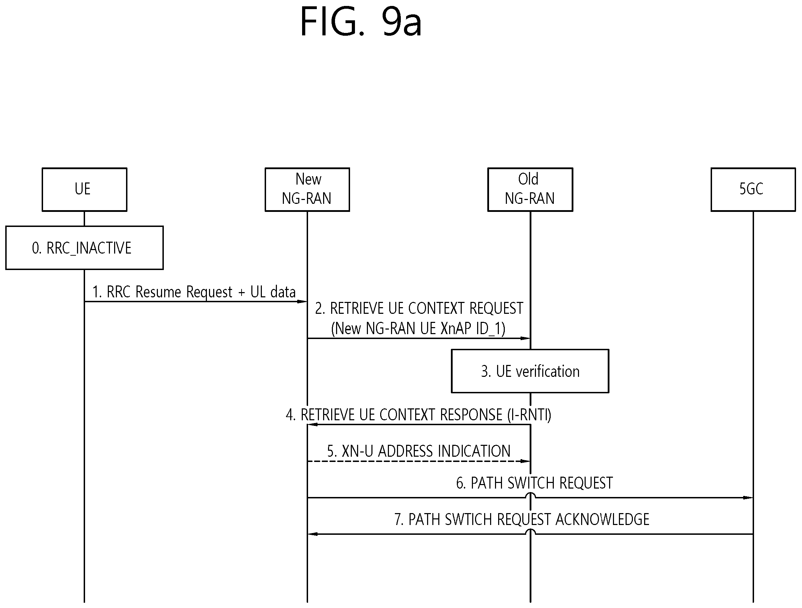

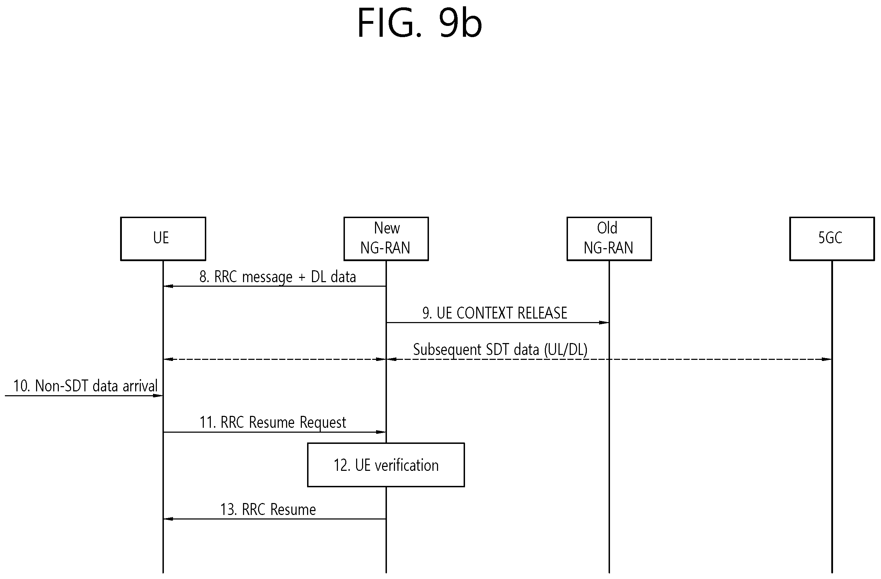

Hereinafter, with reference to the examples of FIGS. 7a and 7b, the examples of FIGS. 8a and 8b, and the examples of FIGS. 9a and 9b, a first example of the present disclosure will be described.

The first example of the disclosure describes an example related to an SDT procedure using anchor relocation.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

### FIGS. 7a and 7b illustrate a signal flow diagram according to the first example of the first part of the present disclosure.

For example, the examples in FIGS. 7a and 7b illustrate an example of a procedure to support non-SDT data transfer in an ongoing SDT procedure with anchor relocation.

According to the examples in FIGS. 7a and 7b, a terminal may notify the old NG-RAN that it has data that needs to be transmitted over a non-SDT bearer. The old NG-RAN can then verify the terminal and generate a new security key and forward it to the new NG-RAN. By default, it is assumed that the UE context is transferred to the new NG-RAN during the SDT process. Furthermore, the present disclosure assumes that both the New NG-RAN and the Old NG-RAN are not separated into CU-CP, CU-UP, and DU, but this is only an example, and the present disclosure may also apply to the case where the New NG-RAN and/or the Old NG-RAN are separated into CU-CP, CU-UP, and DU.

Step 0: The terminal is currently in RRC-INACTIVE state. Therefore, the terminal and the old NG-RAN (=Last serving NG-RAN) are storing the UE context respectively. The NG-C connection between the old NG-RAN and AMF is maintained, and the NG-U connection between the old NG-RAN and UPF is also maintained.

Step 1: The terminal may decide to transmit SDT data in RRC-INACTIVE state. Then, the terminal may generate an RRC Resume Request message including I-RNTI, RRC resume cause (for small data transmission in RRC-INACTIVE), and authentication token (e.g., Resume MAC-I) and send it to the New NG-RAN. The terminal can generate Resume MAC-I based on the KRRCint_0 value that was stored during the transition to RRC_INACTIVE state.

In this case, the SDT data stored in the buffer of the terminal can be multiplexed with the RRC Resume Request message and transmitted. In addition, the terminal may include information related to SDT (e.g., whether UL data is present, whether it responds to DL data, etc.) in the RRC Resume Request message and forward it to the New NG-RAN.

NOTE: After the terminal sends the RRC Resume Request message to the network, the terminal can generate the KgNB*_1 value and derive the new KRRCint_1, KRRCenc_1, KUPenc_1 (Optional), and KUPint_1 (Optional) values from it. These values can be key values used for integrity protection or encryption for the RRC and User plane, respectively. For example, KUPenc is a key derived by the ME and the gNB from the KgNB, which may be used to protect UP traffic using a specific encryption algorithm. For example, KUPint is a key derived by the ME and the gNB from the KgNB, which may be used to secure UP traffic between the ME and the gNB using a specific integrity algorithm. KRRCenc is a key derived by the ME and the gNB from the KgNB, which can be used to protect RRC signaling using a specific encryption algorithm.

Step 2: The new NG-RAN may receive an RRC Resume Request message from the terminal. Based on the I-RNTI, the new NG-RAN may check if it can find the UE context for the terminal. If it fails to find the UE context based on I-RNTI, the new NG-RAN may identify the old NG-RAN based on the I-RNTI. Then, the new NG-RAN may send a RETRIEVE UE CONTEXT REQUEST message to the old NG-RAN to receive the UE context from that node (i.e., the old NG-RAN). In this process, in order to create a UE-associated Xn connection, the New NG-RAN may assign a New NG-RAN UE XnAP ID_1 and forward it to the old NG-RAN accordingly. The New NG-RAN may also inform the old NG-RAN that the terminal is currently connecting to transmit SDT data.

Step 3: The Old NG-RAN can validate the UE. Based on the I-RNTI, the old NG-RAN can check if it can find the UE context for the terminal. If the Old NG-RAN can find the UE context, the Old NG-RAN can verify that the Resume MAC-I sent by the terminal is valid.

Step 4: After the old NG-RAN has completed the verification of the terminal, the old NG-RAN may decide to forward the UE context for the terminal to the new NG-RAN. The old NG-RAN can then respond to the new NG-RAN with a RETRIEVE UE CONTEXT RESPONSE message.

Step 5: If there is DL data to be forwarded to the terminal, in order to receive the DL data, the New NG-RAN can send an XN-U ADDRESS INDICATION message to convey the DL data forwarding address information.

Step 6: The New NG-RAN initiates a Path Switch Request procedure to the 5GC to inform it that the terminal will be served by the New NG-RAN.

Step 7: After the procedure to change the UP path associated with the terminal to the new NG-RAN is complete, the AMF can respond to the new NG-RAN with a PATH SWTICH REQUEST ACKNOWLEDGE message.

Step 8: The New NG-RAN can respond to the terminal via Msg B or Msg 4. In this process, if there is DL data to be delivered to the terminal, the New NG-RAN can multiplex the DL data as an RRC message and transmit it.

The terminal and 5GC can then exchange SDT data over the New NG-RAN.

Step 9: Data related to the non-SDT bearer may arrive at the terminal. Therefore, the terminal may decide to stop sending SDT data to transition to the RRC-CONNECTED state and start the normal resume procedure to inform the network that non-SDT data has arrived.

Step 10: The terminal can send an RRC Resume Request message to the NG-RAN again from the cell where it is currently staying. At this time, the terminal may generate a Resume MAC-I based on the KRRCint_1 value obtained in Step 1. Then, the terminal may include the Resume MAC-I in the second RRC Resume Request message and send it to the New NG-RAN.

NOTE: After sending the second RRC Resume Request message, the terminal can derive KgNB*2 by performing Horizontal Key derivation based on the KgNB*1 value. This allows the terminal to calculate the new KRRCint_2, KRRCenc_2, KUPenc_2 (Optional), and KUPint_2 (Optional) values.

Step 11: Upon receiving the second RRC Resume Request message from the terminal, the new NG-RAN can check if it can find the UE context for the terminal based on the I-RNTI. If the new NG-RAN fails to find the UE context based on I-RNTI, the new NG-RAN can identify the old NG-RAN based on the I-RNTI. Then the New NG-RAN can send a RETRIEVE UE CONTEXT REQUEST message to the old NG-RAN to receive the UE context from that node (i.e., the old NG-RAN). In this process, the new NG-RAN may assign the new NG-RAN UE XnAP ID_2 to the old NG-RAN to create a UE-associated Xn connection.

Step 12: Based on the I-RNTI, the Old NG-RAN can check if it can find the UE context for the terminal. If the UE context can be found, it can verify that the Resume MAC-I sent by the terminal is valid. If the verification for the terminal passes, the Old NG-RAN can derive the KgNB*2 from the KgNB*1 included in the UE context by horizontal key derivation.

NOTE: The Old NG-RAN may use KRRCint_1, rather than KRRCint_0 used in Step 3, to validate the Resume MAC-I sent by the terminal.

Step 13: If the old NG-RAN decides to forward the UE context of the terminal to the new NG-RAN after the verification of the terminal is finished, the old NG-RAN may respond to the new NG-RAN with a RETRIEVE UE CONTEXT FAILURE message. At this time, the Old NG-RAN may include the security key KgNB*2 and NCC value obtained in Step 12 in the message and forward it to the new NG-RAN. For example, the New NG-RAN can perform the following actions by receiving the new security key:
- Non-SDT data has arrived for this terminal and a state transition to RRC_CONNECTED is required to send it.
- Stop sending SDT data to that terminal
- UE verification for that terminal on Old NG-RAN ends successfully
- The node serving the terminal has since become the New NG-RAN, and the trigger for the UE Context Release procedure to the Old NG-RAN side is the
- No need to perform the Path Switch Request procedure again on the AMF side
- The UE context that was received through Step 4 and was being used to send SDTs can continue to be used for sending SDTs.

In the process of transitioning the terminal to RRC_CONNECTED and supporting the transmission of non-SDT data, the old NG-RAN may perform the following actions to ensure that the New NG-RAN can continue to use the UE context received in step 4. For example, the old NG-RAN may include the New NG-RAN UE XnAP ID_1 that the New NG-RAN assigned during step 2 in the RETRIEVE UE CONTEXT FAILURE message. Based on this, the New NG-RAN can find the UE context that was being used for SDT transmission since it was received in step 4 and can continue to utilize it. If the New NG-RAN may fail to find the UE context via the New NG-RAN UE XnAP ID_1, it can notify the old NG-RAN with a new cause value associated with it. In this case, the old NG-RAN can initiate a procedure to pass the UE context back to the new NG-RAN.

The new NG-RAN can calculate new KRRCint_2, KRRCenc_2, KUPenc_2 (Optional), and KUPint_2 (Optional) values based on the received KgNB*2.

NOTE: A new XnAP message may be defined and used instead of the RETRIEVE UE CONTENT FAILURE message. Alternatively, the RETRIEVE UE CONTEXT RESPONSE message may be utilized instead of the RETRIEVE UE CONTEXT FAILURE message, in which case (e.g., if the path switch for some PDU sessions fails in Steps 6 and 7 and the PDU sessions are released, but the PDU sessions are again included in the UE context received in Step 13), there is a possibility that the outdated UE context stored by the old NG-RAN is passed to the new NG-RAN. To prevent this, the old NG-RAN may add a new indication in the RETRIEVE UE CONTEXT RESPONSE message so that the new NG-RAN can ignore the mandatory IEs in the RETRIEVE UE CONTEXT RESPONSE message except the IEs related to the security key.

NOTE: If the New NG-RAN is composed of CU-CP, CU-UP, and DU, the CU-CP of the New NG-RAN can calculate the new KRRCint_2, KRRCenc_2, KUPenc_2 (Optional), and KUPint_2 (Optional) values based on KgNB*2. Then, the E1AP message (e.g., BEARER CONTEXT SETUP REQUEST, BEARER CONTEXT MODIFICATION REQUEST, or New message) can be sent to the CU-UP of the New NG-RAN to inform the CU-UP of the New NG-RAN of the change date of the UP security key. In this process, the CU-CP of the New NG-RAN can also inform the CU-UP of the New NG-RAN that the PDCP associated with the SDT Bearer should not initialize the COUNT value. This enables the New NG-RAN to transition the terminal to the RRC_CONNECTED state and exchange the SDT data that was stopped in step 13 with the terminal again.

NOTE: If the New NG-RAN is composed of CU-CP, CU-UP and DU, the CU-CP of the New NG-RAN may utilize the UE Context that was used during the SDT transmission process. In this case, the CU-CP of the New NG-RAN may send a UE CONTEXT MODIFICATION REQUEST message to the DU of the New NG-RAN to request the setup for the non-SDT bearer (e.g., Bearer configuration, F1 UL TEIDs). In the SDT process for the corresponding terminal, the CU-CP of the New NG-RAN may forward the old gNB-DU UE F1AP ID set by the DU of the New NG-RAN. This allows the DU of the New NG-RAN to know that the terminal is attempting to establish a non-SDT bearer in addition to the SDT bearer. This allows the DU in the New NG-RAN to utilize the information such as SDT bearer and CG configuration that it has set up for the terminal.

If the DU of the New NG-RAN fails to find the UE context via the old gNB-DU UE F1AP ID, the DU of the New NG-RAN may notify the CU of the New NG-RAN with a new cause value associated with it. In this case, the CU of the new NG-RAN may initiate a procedure to create a new UE context again in the DU of the new NG-RAN.

Step 14: The new NG-RAN can generate and send an RRC Resume message to the terminal to transition the terminal to the RRC_CONNECTED state. The new NG-RAN may encrypt the RRC Resume message using the KgNB*2 received in Step 13. Then, the terminal can decrypt the corresponding RRC message based on the KgNB*2 calculated in Step 10.

Step 15: The new NG-RAN can send a UE Context Release message to the old NG-RAN to request the release of the corresponding terminal. Upon receiving it, the old NG-RAN can delete all contexts related to the terminal and release the allocated resources.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

### FIGS. 8a and 8b illustrate signal flow diagrams according to a second example of the first example of the present disclosure.

For example, the examples in FIGS. 8a and 8b illustrate an example of a procedure to support non-SDT data transfer in an ongoing SDT procedure with anchor relocation.

According to the examples in FIGS. 8a and 8b, a terminal may notify the old NG-RAN that it has data that needs to be transmitted over a non-SDT bearer. The old NG-RAN may then perform verification of the terminal and communicate to the new NG-RAN that the verification has been passed. Upon receiving the indication from the old NG-RAN, the new NG-RAN can use horizontal key derivation to generate a new security key for the terminal. By default, it is assumed that the UE context is transferred to the new NG-RAN during the SDT process. Furthermore, the present disclosure assumes that both the new NG-RAN and the old NG-RAN are not separated into CU-CP, CU-UP, and DU, but this is only an example, and the present disclosure may also apply to the case where the new NG-RAN and/or the old NG-RAN are separated into CU-CP, CU-UP, and DU.

Step 0 through Step 11: This can be performed in the same way as Step 0 through Step 11 of the examples in FIG. 7a and FIG. 7b.

Step 12: Based on the I-RNTI, the Old NG-RAN can check if it can find the UE context for the terminal. If the Old NG-RAN can find the UE context, the Old NG-RAN can verify that the Resume MAC-I sent by the terminal is valid.

NOTE: The Old NG-RAN may use KRRCint_1, rather than KRRCint_0 used in Step 3, to validate the Resume MAC-I sent by the terminal.

Step 13: If the old NG-RAN decides to pass the UE context for the terminal to the new NG-RAN after the verification of the terminal is finished, the old NG-RAN may respond to the new NG-RAN with a RETRIEVE UE CONTEXT FAILURE message. The old NG-RAN may also include a "Non-SDT data arrival" indication in the message and forward it to the new NG-RAN. Upon receiving the new indication, the new NG-RAN may take the following actions
- Non-SDT data has arrived for the terminal and the terminal knows that a state transition to RRC_CONNECTED is required to send non-SDT data
- Stop sending SDT data to that terminal
- UE verification for that terminal on Old NG-RAN ends successfully
- The node serving the terminal has since become the New NG-RAN, and the trigger for the UE Context Release procedure to the Old NG-RAN side is the
- No need to perform the Path Switch Request procedure again on the AMF side
- It is needed to perform horizontal key derivation based on the KgNB*1 that has used in the ongoing SDT session (i.e., Steps 4 through 8) to get a new security key KgNB*2
- The UE context that was received through Step 4 and was being used to send SDTs can continue to be utilized.

In the process of transitioning the terminal to RRC_CONNECTED and supporting the transmission of non-SDT data, the old NG-RAN may perform the following actions to ensure that the New NG-RAN can continue to use the UE context received in step 4. For example, the old NG-RAN may include the New NG-RAN UE XnAP ID_1 that the New NG-RAN assigned during step 2 in the RETRIEVE UE CONTEXT FAILURE message. Based on this, the New NG-RAN can find the UE context that was being used for SDT transmission since it was received in step 4 and can continue to utilize it. If the New NG-RAN fails to find the UE context based on the New NG-RAN UE XnAP ID_1, it can notify the old NG-RAN with a new cause value associated with it. In this case, the old NG-RAN can initiate a procedure to pass the UE context back to the new NG-RAN.

New NG-RAN can calculate new KRRCint_2, KRRCenc_2, KUPenc_2 (Optional), and KUPint_2 (Optional) values based on the newly obtained KgNB*2 through horizontal key derivation.

NOTE: A new XnAP message may be defined and used instead of the RETRIEVE UE CONTENT FAILURE message. Alternatively, the RETRIEVE UE CONTEXT RESPONSE message may be utilized instead of the RETRIEVE UE CONTEXT FAILURE message, in which case (e.g., if the path switch for some PDU sessions fails in Steps 6 and 7 and the PDU sessions are released, but the PDU sessions are again included in the UE context received in Step 13), there is a possibility that the outdated UE context stored by the old NG-RAN is passed to the new NG-RAN. To prevent this, the new NG-RAN may add a new indication in the RETRIEVE UE CONTEXT RESPONSE message for the old NG-RAN to ignore the mandatory IEs in the RETRIEVE UE CONTEXT RESPONSE message except those related to the security key, or to ignore all mandatory IEs.

NOTE: If the New NG-RAN is composed of CU-CP, CU-UP, and DU, the CU-CP of the New NG-RAN can calculate the new KRRCint_2, KRRCenc_2, KUPenc_2 (Optional), and KUPint_2 (Optional) values based on KgNB*2. Then, the E1AP message (e.g., BEARER CONTEXT SETUP REQUEST, BEARER CONTEXT MODIFICATION REQUEST, or New message) can be sent to the CU-UP of the New NG-RAN to inform the CU-UP of the New NG-RAN of the change date of the UP security key. In this process, the CU-CP of the New NG-RAN can also inform the CU-UP of the New NG-RAN that the PDCP associated with the SDT Bearer should not initialize the COUNT value. This allows the New NG-RAN to transition the terminal to the RRC_CONNECTED state and exchange the SDT data that was interrupted in step 13 with the terminal again.

NOTE: If the New NG-RAN is composed of CU-CP, CU-UP and DU, the CU-CP of the New NG-RAN may utilize the UE Context that was used during the SDT transmission process. In this case, the CU-CP of the New NG-RAN may send a UE CONTEXT MODIFICATION REQUEST message to the DU of the New NG-RAN to request the setup for the non-SDT bearer (e.g., Bearer configuration, F1 UL TEIDs). In the SDT process for the corresponding terminal, the CU-CP of the New NG-RAN may forward the old gNB-DU UE F1AP ID set by the DU of the New NG-RAN. This allows the DU of the New NG-RAN to know that the terminal is attempting to establish a non-SDT bearer in addition to the SDT bearer. This allows the DU in the New NG-RAN to utilize the information such as SDT bearer and CG configuration that it has set up for the terminal.

If the DU of the New NG-RAN fails to find the UE context via the old gNB-DU UE F1AP ID, the DU of the New NG-RAN may notify the CU of the New NG-RAN with a new cause value associated with it. In this case, the CU of the new NG-RAN may initiate a procedure to create a new UE context again in the DU of the new NG-RAN.

Step 14 to Step 15: This can be performed in the same way as Step 14 to Step 15 of the examples in FIG. 7a and FIG. 7b.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

### FIGS. 9a and 9b illustrate signal flow diagrams according to a third example of the first example of the present disclosure.

For example, the examples in FIG. 9a and FIG. 9b illustrate an example of a procedure to support non-SDT data transfer in an ongoing SDT procedure with anchor relocation.

According to the example in Fig. 9a and Fig. 9b, during the SDT process for the terminal, the old NG-RAN proposes to pass the UE context to the new NG-RAN along with the I-RNTI value currently assigned to the terminal. Therefore, when the terminal sends a second RRC Resume Request message, the new NG-RAN can perform the Resume MAC-I verification instead of the old NG-RAN. Basically, it is assumed that the UE context is moved to the new NG-RAN during SDT. Also, it is assumed that both the new NG-RAN and the old NG-RAN are not separated into CU-CP, CU-UP, and DU, but it is applicable to the case where they are separated into CU-CP, CU-UP, and DU.

Step 0 through Step 3: This can be performed in the same way as Step 0 through Step 3 of the examples in FIG. 7a and FIG. 7b.

Step 4: After the old NG-RAN has completed the verification of the terminal, the old NG-RAN may decide to forward the UE context for the terminal to the new NG-RAN. The old NG-RAN may then respond to the new NG-RAN with a RETRIEVE UE CONTEXT RESPONSE message. In doing so, the old NG-RAN may include value assigned by the old NG-RAN for that terminal in the message the I-RNTI and pass it to the new NG-RAN.

When the New NG-RAN receives the I-RNTI value, the New NG-RAN can store it in the UE context. The New NG-RAN can then notify the Old NG-RAN that it needs to start the UE Context Release procedure as soon as the Path Switch Request procedure is finished.

NOTE: To prevent the same I-RNTI from being utilized by multiple NG-RANs, the old NG-RAN may pre-assign two I-RNTI values when it transitions the terminal to the RRC_INACTIVE state in Step 0. The Old NG-RAN may include the two I-RNTI values in the RRC Release message to the terminal. In this case, the terminal may include the first I-RNTI in the message while sending the first RRC Resume Request message in Step 1. The Old NG-RAN may include the second I-RNTI value in the RETRIEVE UE CONTEXT RESPONSE message in Step 4 and forward it to the New NG-RAN if the verification of the terminal in Step 3 is successful. When the terminal receives the non-SDT data in Step 10, it may include the I-RNTI value not used in Step 1 (i.e., the second I-RNTI) in the second RRC Resume Request message and transmit it to the network. In this case, the New NG-RAN can find the UE context by comparing the I-RNTI value received from the old NG-RAN in Step 4 with the I-RNTI value received from the terminal in Step 11.

Step 5 through Step 8: This can be performed in the same way as Step 5 through Step 8 in the examples in FIG. 7a and FIG. 7b.

Step 9: The new NG-RAN can request the release of the corresponding terminal by sending a UE Context Release message to the old NG-RAN. Upon receiving it, the old NG-RAN can delete all contexts related to the terminal and release the allocated resources.

Step 10: This can be performed in the same way as Step 9 in the examples in Figure 7a and Figure 7b.

Step 11: This can be performed in the same way as Step 10 in the examples in Figure 7a and Figure 7b.

NOTE: After sending the second RRC Resume Request message, the terminal can derive KgNB*2 by performing Horizontal Key derivation or Vertical Key derivation based on the KgNB*1 value. This allows the terminal to calculate the new KRRCint_2, KRRCenc_2, KUPenc_2 (Optional), and KUPint_2 (Optional) values.

Step 12: The New NG-RAN may receive a second RRC Resume Request message from the terminal. Then, the new NG-RAN knows that non-SDT data has arrived for that terminal and a state transition to RRC_CONNECTED is required to transmit it. Therefore, the New NG-RAN can stop sending SDT data for that terminal and check if it can find the UE context for that terminal, i.e., the New NG-RAN can compare the I-RNTI value received from the old NG-RAN in Step 4 with the I-RNTI sent by the terminal to find the UE context used by the New NG-RAN for the ongoing SDT session (i.e., Steps 4 to 8). The New NG-RAN can then verify that the Resume MAC-I sent by the terminal is valid.

Step 13: The New NG-RAN may derive KgNB*2 from KgNB*1 included in the UE context through horizontal vertical key derivation or vertical key derivation if the verification of the terminal passes. Furthermore, New NG-RAN may calculate new KRRCint_2, KRRCenc_2, KUPenc_2 (Optional), and KUPint_2 (Optional) values based on KgNB*2.

The New NG-RAN may generate and transmit an RRC Resume message to the terminal to transition the terminal to the RRC_CONNECTED state. The New NG-RAN encrypts the RRC Resume message using the KgNB*2 derived earlier, and the terminal can decrypt the RRC message based on the KgNB*2 calculated in Step 11.

NOTE: If the New NG-RAN is composed of CU-CP, CU-UP, and DU, the CU-CP of the New NG-RAN can calculate the new KRRCint_2, KRRCenc_2, KUPenc_2 (Optional), and KUPint_2 (Optional) values based on KgNB*2. Then, the E1AP message (e.g., BEARER CONTEXT SETUP REQUEST, BEARER CONTEXT MODIFICATION REQUEST, or New message) can be sent to the CU-UP of the New NG-RAN to inform the CU-UP of the New NG-RAN of the change date of the UP security key. In this process, the CU-CP of the New NG-RAN can also inform the CU-UP of the New NG-RAN that the PDCP associated with the SDT Bearer should not initialize the COUNT value. This enables the New NG-RAN to transition the terminal to the RRC_CONNECTED state and exchange the SDT data that was interrupted in step 12 with the terminal again.

NOTE: If the New NG-RAN is composed of CU-CP, CU-UP and DU, the CU-CP of the New NG-RAN may utilize the UE Context that was used during the SDT transmission process. In this case, the CU-CP of the New NG-RAN may send a UE CONTEXT MODIFICATION REQUEST message to the DU of the New NG-RAN to request the setup for the non-SDT bearer (e.g., Bearer configuration, F1 UL TEIDs). In the SDT process for the corresponding terminal, the CU-CP of the New NG-RAN may forward the old gNB-DU UE F1AP ID set by the DU of the New NG-RAN. This allows the DU of the New NG-RAN to know that the terminal is attempting to establish a non-SDT bearer in addition to the SDT bearer. This allows the DU in the New NG-RAN to utilize the information such as SDT bearer and CG configuration that it has set up for the terminal.

If the DU of the New NG-RAN fails to find the UE context via the old gNB-DU UE F1AP ID, the DU of the New NG-RAN may notify the CU of the New NG-RAN with a new cause value associated with it. In this case, the CU of the new NG-RAN may initiate a procedure to create a new UE context again in the DU of the new NG-RAN.

### 2. A second example of the present disclosure

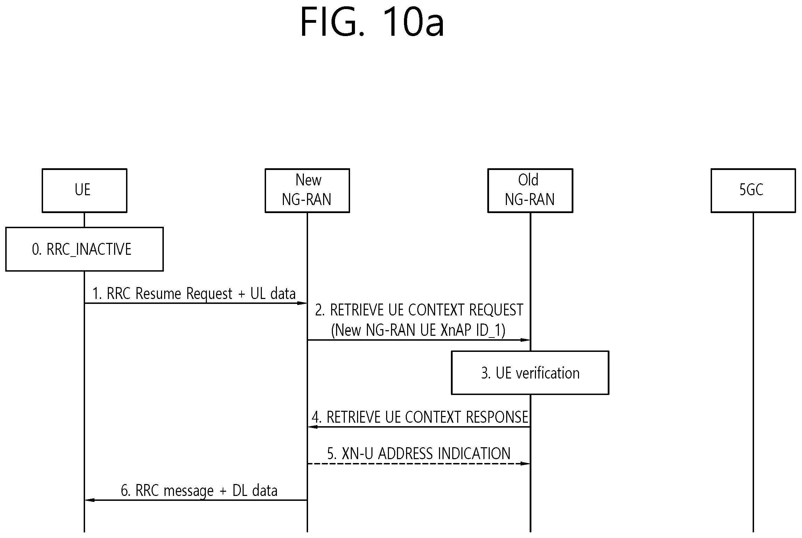

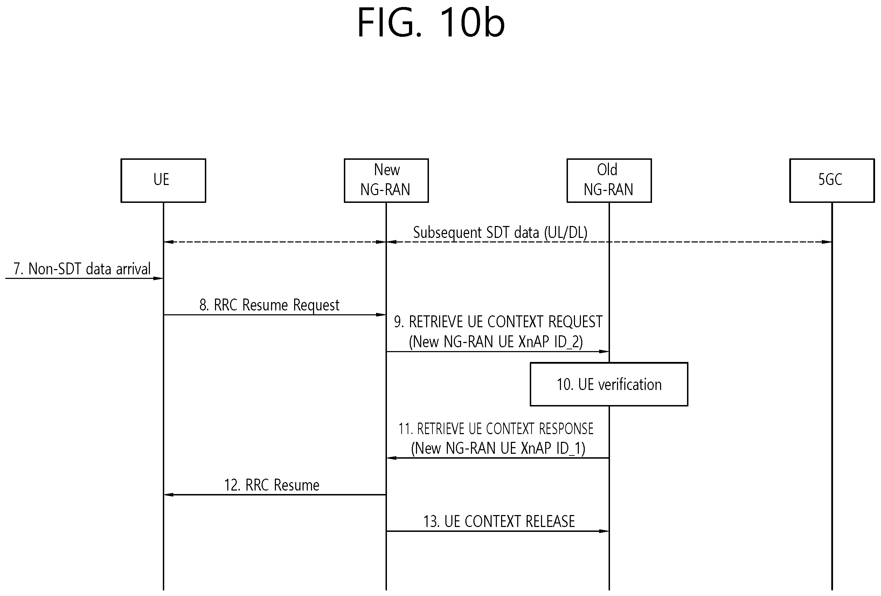

Hereinafter, a second example of the disclosure will be described with reference to the examples of FIGS. 10a and 10b.

The second example of the disclosure describes an example involving an SDT procedure that does not use anchor relocation.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

### FIGS. 10a and 10b illustrate signal flow diagrams according to a second example of the present disclosure.

For example, the examples in FIGS. 10a and 10b illustrate an example of a procedure for supporting non-SDT data transfer in an ongoing SDT procedure, without anchor relocation.

For example, the examples in FIGS. 10a and 10b illustrate an example of a procedure for supporting non-SDT data transfer in an ongoing SDT procedure, without anchor relocation.

According to the examples of FIGS. 10a and 10b, the terminal may notify the old NG-RAN that it has data to be transmitted over a non-SDT bearer, according to the examples of FIGS. 7a and 7b. The old NG-RAN can then verify the terminal and generate a new security key and forward it to the new NG-RAN. By default, it is assumed that only some UE context is transferred to the new NG-RAN during the SDT process. Furthermore, the disclosure assumes that both the New NG-RAN and the Old NG-RAN are not separated into CU-CP, CU-UP, and DU, but this is for illustrative purposes only, and the disclosure may also apply to the case where the New NG-RAN and/or the Old NG-RAN are separated into CU-CP, CU-UP, and DU.

Step 0 through Step 3: This can be performed in the same way as Step 0 through Step 3 of the examples in FIG. 7a and FIG. 7b.

Step 4: After the old NG-RAN finishes validating the terminal, the old NG-RAN may decide that it still wants to keep the UE context for that terminal. The old NG-RAN can then send a PARTIAL UE CONTEXT TRANSFER message to the new NG-RAN. The XnAP message includes some UE context (i.e., RLC layer configuration for SDT bearer, DRB ID, UL TNL Address Information, etc.

Step 5: This can be performed in the same way as Step 5 in the examples in Figure 7a and Figure 7b.

Step 6: The New NG-RAN can respond to the terminal based on Msg B or Msg 4. In this process, if there is DL data to be delivered to the terminal, the New NG-RAN can multiplex the DL data like an RRC message and transmit it.

The terminal and 5GC can then exchange SDT data over the New NG-RAN.

Step 7: This can be performed in the same way as Step 9 in the examples in FIG. 7a and FIG. 7b.

Step 8: This can be performed in the same way as Step 10 in the examples in FIG. 7a and FIG. 7b.

Step 9: This can be performed in the same way as Step 11 in the examples in FIG. 7a and FIG. 7b.

Step 10: This can be performed in the same way as Step 12 in the examples in FIG. 7a and FIG. 7b.

Step 11: If the old NG-RAN decides to forward the UE context of the terminal to the new NG-RAN after the verification of the terminal is finished, the old NG-RAN may respond to the new NG-RAN with a RETRIEVE UE CONTEXT RESPONSE message. At this time, the old NG-RAN may include the security key KgNB*2 and NCC value obtained in Step 10 in the message and forward it to the new NG-RAN.

In the process of transitioning the corresponding terminal to RRC_CONNECTED and supporting the transmission of non-SDT data, the old NG-RAN may perform the following behavior to allow the New NG-RAN to continue to use the UE context associated with the SDT bearer received in step 4. For example, the old NG-RAN may include in the RETRIEVE UE CONTEXT RESPONSE message the New NG-RAN UE XnAP ID_1 that the New NG-RAN assigned during step 2. Based on this, the New NG-RAN can locate the UE context that has been in use for SDT transmission since it was received in step 4 and can continue to utilize it. This also allows the new NG-RAN to know that non-SDT data has been generated for that terminal, and therefore the new NG-RAN can stop sending SDT for that terminal. It is also possible that the New NG-RAN fails to find the UE context associated with the SDT bearer based on the New NG-RAN UE XnAP ID_1. In this case, the New NG-RAN may utilize the UE context included in the RETRIEVE UE CONTEXT RESPONSE message to recreate the UE context for the SDT bearer.

New NG-RAN may calculate new KRRCint_2, KRRCenc_2, KUPenc_2 (Optional), and KUPint_2 (Optional) values based on the received KgNB*2.

NOTE: The CU-CP of the Old NG-RAN, through the CU-CP of the New NG-RAN, can jointly inform the CU-UP of the New NG-RAN that the PDCP related to the SDT Bearer in step 11 should not initialize the COUNT value. This allows the New NG-RAN to transition the terminal to the RRC_CONNECTED state and exchange the SDT data that was interrupted in step 11 with the terminal again.

NOTE: If the New NG-RAN is composed of CU-CP, CU-UP and DU, the CU-CP of the New NG-RAN may utilize the UE Context that was used during the SDT transmission process. In this case, the CU-CP of the New NG-RAN may send a UE CONTEXT MODIFICATION REQUEST message to the DU of the New NG-RAN to request the setup for the non-SDT bearer (e.g., Bearer configuration, F1 UL TEIDs). In the SDT process for the corresponding terminal, the CU-CP of the New NG-RAN may forward the old gNB-DU UE F1AP ID set by the DU of the New NG-RAN. This allows the DU of the New NG-RAN to know that the terminal is attempting to establish a non-SDT bearer in addition to the SDT bearer. This allows the DU in the New NG-RAN to utilize the information such as SDT bearer and CG configuration that it has set up for the terminal.

If the DU of the New NG-RAN fails to find the UE context via the old gNB-DU UE F1AP ID, the DU of the New NG-RAN may notify the CU of the New NG-RAN with a new cause value associated with it. In this case, the CU of the new NG-RAN may initiate a procedure to create a new UE context again in the DU of the new NG-RAN.

NOTE: The RETRIEVE UE CONTENT RESPONSE message sent in step 11 may be a response to the RETRIEVE UE CONTENT REQUEST message sent in step 2. In this case, the Old NG-RAN may additionally include the New NG-RAN UE XnAP ID_2, rather than the New NG-RAN UE XnAP ID_1, in the RETRIEVE UE CONTENT RESPONSE message.

Step 12: The new NG-RAN can generate and send an RRC Resume message to the terminal to transition the terminal to the RRC_CONNECTED state. The new NG-RAN may encrypt the RRC Resume message using the KgNB*2 received in Step 11. Then, the terminal can decrypt the corresponding RRC message based on the KgNB*2 calculated in Step 8.

Step 13: The new NG-RAN can send a UE Context Release message to the old NG-RAN to request the release of the corresponding terminal. Upon receiving it, the old NG-RAN can delete all contexts related to the terminal and release the allocated resources.

### 3. A third example of the present disclosure

Hereinafter, a third example of the present disclosure may be described. Note that the third example of the disclosure may be an example of a specific application of the various examples described in the first and/or second examples of the present disclosure described above.

According to the third example of the present disclosure, in the presence of UL data for a non-SDT bearer, the UE may interrupt an ongoing SDT session and then initiate a procedure to indicate the arrival of this non-SDT data to the network. One of the solutions to support this is for the UE to send a second RRCResumeRequest message using the I-RNTI issued by the previous anchor gNB and perform horizontal key derivation. An example of a flowchart related to such a procedure is shown in the examples of FIG. 6a and FIG. 6b described earlier.

As mentioned earlier, there are issues like the example below:
For example, it is unclear which node (the former anchor gNB or the serving gNB) will process the second RRCResumeRequest message with the I-RNTI associated with the former anchor gNB and perform ResumeMAC-I validation and key derivation; and/or
In another example, it is unclear whether the previous anchor gNB and/or serving gNB can distinguish the second RRCResumeRequest message from the explicit indication sent by the UE.

In an SDT without anchor relocation (e.g., Random Access Channel (RACH) based SDT (RA-SDT)), when the second RRCResumeRequest message is received, the serving gNB has not found the UE context based on the I-RNTI. Therefore, the serving gNB may verify the node ID included in the I-RNTI and initiate the Retrieve UE Context procedure to request the old anchor gNB to provide the UE context. Therefore, in this case, the old anchor gNB can perform ResumeMAC-I validation and key derivation.

Observation 1: In RA-SDT without anchor relocation, it may be natural for the previous anchor gNB to perform ResumeMAC-I validation and key derivation.

In an SDT with anchor relocation, if an SDT session is being used but the serving gNB has not yet initiated the XnAP UE Context Release procedure with the old anchor gNB after the Retrieve UE Context procedure, both gNBs may temporarily have the full UE context. In this case, when the UE sends a second RRCResumeRequest message, the serving gNB may not find the UE context based on the I-RNTI included in the second RRCResumeRequest message because the I-RNTI was assigned by the old anchor gNB. Therefore, as in RA-SDT without anchor relocation, the serving gNB may initiate the Retrieve UE Context procedure. The former anchor gNB can then perform ResumeMAC-I validation and key derivation.

Since the serving gNB needs to provide the I-RNTI assigned by the existing anchor gNB to the serving gNB during the SDT procedure in order to perform ResumeMAC-I validation and key derivation, it is possible to reuse the same I-RNTI across two different gNBs. On the other hand, such reuse may need to be avoided.

Observation 2: Even in RA-SDTs with anchor relocation, the previous anchor gNB must perform ResumeMAC-I validation and key derivation.

Based on observations 1 and 2, the following proposals are provided.

Proposal 1: The previous anchor gNB shall process the second RRCResumeRequest message and then perform ResumeMAC-I validation and key derivation.

Regarding the second issue mentioned earlier, it is assumed that the UE is able to send a second RRCResumeRequest message with an updated security key before contention resolution of the first RRCResumeRequest message for the SDT is complete. If the first RRCResumeRequest message is lost but the second message can be sent to the previous anchor gNB, the previous anchor gNB does not know which security key (i.e., KRRCint_0 or KRRCint_1) was used to verify the ResumeMAC-I in the second RRCResumeRequest message. One possible solution to avoid this problem is for the UE to include an explicit indication to distinguish the second RRCResumeRequest message. However, this may affect the specification from the RRC point of view. Another solution is for the previous anchor gNB to perform the ResumeMAC-I verification twice based on each security key. This can be implemented without affecting the specification. The latter solution may be more desirable from the gNB perspective.

Proposal 2: No explicit indication sent by the UE to distinguish the second RRRCResumeRequest message from the gNB perspective is provided.

Some spec updates may be required to support this CCCH solution.

In RA-SDT with anchor relocation, during the SDT session, the previous anchor gNB shall maintain UE context to check ResumeMAC-I when it receives the second RRCResumeRequest message. Therefore, the serving gNB shall maintain the initiation of the UE decontextualization procedure towards the previous anchor gNB during the ongoing SDT session. This may be reflected in a future specification update.

In addition, upon receiving a second RRCResumeRequest message indicating the arrival of non-SDT data, the previous anchor gNB derives a new security key KgNB*2 after ResumeMAC-I validation and provides this derived security key to the serving gNB. In this scenario, how to notify the serving gNB of the successful validation of ResumeMAC-I and provide an updated security key should be discussed. One of the solutions is to use the RETRIEVE UE CONTEXT RESPONSE message to provide the updated security key to the serving gNB. However, the UE context is already sent to the serving gNB during the ongoing SDT procedure. The serving gNB may then change some parameters in the UE context during the route switch request procedure. Therefore, when the old anchor gNB retransmits the UE context with the RETRIEVE UE CONTEXT RESPONSE message, some IEs in the UE context may be outdated. Furthermore, according to the existing procedure, upon receiving the RETRIEVE UE CONTEXT RESPONSE message, the serving gNB shall initiate a reroute request to the 5GC. However, in this scenario, this step should be skipped because the serving gNB has already established the UE related signaling connection to the 5GC and switched the UP path. Therefore, it may not be reasonable to use the RETRIEVE UE CONTEXT RESPONSE message to provide the updated security key to the serving gNB.

Another solution is to include the updated security key in the RETRIEVE UE CONTEXT FAILURE message. Based on this information, the serving gNB can assume that the non-SDT data has arrived at the UE and that ResumeMAC-I has been successfully validated. The serving gNB can then calculate the UP and CP keys based on the security key KgNB*2 of the previous anchor gNB. In this case, there is no need to initiate the path switching request procedure.

Observation 3: After successful validation of ResumeMAC-I in the second RRCResumeRequest message, the previous anchor gNB shall send a RETRIEVE UE CONTEXT FAILURE message with the updated security key KgNB*2.

In addition, the old anchor gNB must provide the old UE in order for the serving gNB to continue to use the UE context provided in the ongoing SDN procedure. The XnAP ID assigned by the serving gNB during the ongoing SDT procedure.

Observation 4: The previous anchor gNB shall transmit the former UE XnAP ID assigned by the serving gNB during the ongoing SDT procedure.

Based on the observations, the following suggestions are provided.

Proposal 3: A CCCH solution is feasible from a RAN3 perspective.

Proposal 4: If a CCCH solution is adopted for non-SDT data arrivals, there may be further discussion on how to support the CCCH solution.

In accordance with a third example of the present disclosure, the following examples may be proposed

Proposal 1: The previous anchor gNB shall process the second RRCResumeRequest message and then perform ResumeMAC-I validation and key derivation.

Proposal 2: No explicit indication sent by the UE to distinguish the second RRRCResumeRequest message from the gNB perspective is provided.

Proposal 3: A CCCH solution is feasible from a RAN3 perspective.

Proposal 4: If a CCCH solution is adopted for non-SDT data arrivals, there may be further discussion on how to support the CCCH solution.

### 4. A fourth example of the present disclosure

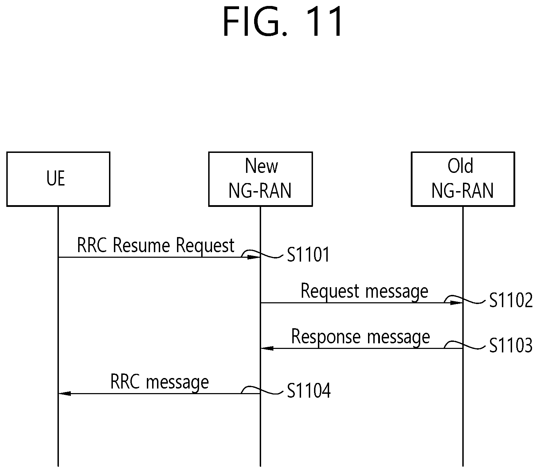

Hereinafter, a fourth example of the present disclosure will be described with reference to the example of FIG. 11.

The fourth example of the present disclosure may represent an example of operation of a UE, an example of operation of a New NG-RAN, an example of operation of an old NG-RAN, an example of operation of a 5GC (e.g., SMF, AMF, and/or UPF, etc.) that may be applicable to at least one example of the first, second, and/or third examples of the disclosure previously described with various examples.

In the following, the behavior described in the example of FIG. 11 is illustrative only, and the behavior of the UE, New NG-RAN, Old NG-RAN, 5GC, etc. is not limited by the example of FIG. 11 in the scope of the present disclosure. For example, the UE, New NG-RAN, Old NG-RAN, 5GC, etc. may perform the operations described in the first, second, and/or third examples of the present disclosure even if not shown in the example of FIG. 11. For example, although not shown in the example of FIG. 11, the UE, New NG-RAN, Old NG-RAN, 5GC, etc. may perform the operations described in the previously described examples of FIGS. 6a and 6b, FIGS. 7a and 7b, FIGS. 8a and 8b, FIGS. 9a and 9b, and/or FIGS. 10a and 10b.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

### FIG. 11 illustrates signal flow diagrams according to a fourth example of the present disclosure.

The example of FIG. 11 illustrates an example of performing communications related to SDT. For example, the example of FIG. 11 illustrates an example operation to support the transfer of non-SDT data while an SDT procedure is in progress.

Note that New NG-RAN can mean New gNB, Serving gNB. Old NG-RAN can mean Old gNB, Last serving gNB.

Note that step S1101 may be performed after non-SDT data occurs to the UE, while the SDT procedure is still in progress.

For example, before step S1101 is performed, step 1 to step 14 of the example of FIGS. 6a and 6b may be performed. For example, before step S1101 is performed, step 1 to step 9 of the example of FIGS. 7a and 7b may be performed. For example, before step S1101 is performed, step 1 to step 9 of the example of FIG. 8a and FIG. 8b may be performed. For example, before step S1101 is performed, step 1 to step 10 of the example of FIGS. 9a and 9b may be performed. For example, before step S1101 is performed, step 1 to step 7 of the example of FIG. 10a and FIG. 10b may be performed.

In step S1101, the UE may send an RRC Resume Request message to the New NG-RAN.

In step S1102, the New NG-RAN may send a request message to the old NG-RAN. The request message may include the UE XnAP ID and the I-RNTI.

The Old NG-RAN can validate the UE based on the I-RNTI. For example, the Old NG-RAN can find the UE context of the UE based on the I-RNTI. The Old NG-RAN can verify that the Resume MAC-I sent by the UE is valid. Then, the Old NG-RAN may derive the security key KgNB*2 from KgNB*1 included in the UE context through horizontal key derivation.

In step S1103, the Old NG-RAN may send a response message to the New NG-RAN. The response message may include the UE XnAP ID previously assigned by the New NG-RAN. By receiving the UE XnAP ID that the New NG-RAN assigned, the New NG-RAN can recognize that non-SDT data has occurred. The New NG-RAN may then stop sending SDTs to the UE. Furthermore, the response message may include, for example, the security key KgNB*2.

Note that, when the operation according to the example of FIGS. 9a and 9b is performed, steps S1102 and S1103 may not be performed. For example, in accordance with the examples of FIGS. 9a and 9b, after step S1101 is performed, the New NG-RAN may perform the verification of the UE.

In step S1104, the New NG-RAN may transmit the RRC message to the UE. For example, the New NG-RAN may encrypt the RRC message using the security key KgNB*2.

Note that in the example of Figure 11, the request message may be a RETRIEVE UE CONTENT REQUEST message and the response message may be a RETRIEVE UE CONTENT FAILURE message. Alternatively, the response message may be a RETRIEVE UE CONTENT RESPONSE message.

The various examples of the disclosure, described with reference to the various drawings, may be performed individually or in combination with other examples.

As described in the disclosure of the present disclosure with reference to various examples, in order to support non-SDT data transmission of the terminal, the old NG-RAN may generate and transmit a security key value for the new NG-RAN to use in the RRC_CONNECTED state after completing the verification of the terminal. Also, if the new NG-RAN has already completed the AMF and Path Switch Request process during the SDT process, it can send an additional indication to the old NG-RAN so that it does not repeat the process again. In addition, to ensure that the new NG-RAN can continue to use the UE context used during the SDT process, the new NG-RAN UE XnAP ID_1 assigned by the new NG-RAN during the SDT process can be included so that the new NG-RAN can find the existing UE context used during the SDT process.

As described in the present disclosure with reference to various examples, in order to support the transmission of non-SDT data, it is possible to prevent unnecessary behavior of the terminal by allowing the terminal to transition to the RRC_CONNECTED state in the middle of the SDT transmission to transmit non-SDT data without interrupting the SDT transmission and reestablishing the RRC connection. In particular, it proposes a method to change the gNB serving the device while transitioning the device to the RRC_CONNECTED state to help the device transition quickly.

As described in the disclosure herein with reference to various examples, when non-SDT data is encountered by a terminal in the course of an ongoing SDT, the terminal can quickly transition to the RRC_CONNECTED state to support fast transmission of the non-SDT data. It also allows the UE context used in the ongoing SDT to continue to be utilized, preventing the new NG-RAN from repeatedly creating a UE context for the same terminal and requesting a change of up path to the 5GC.

As described in the disclosure herein with reference to various examples, methods may be proposed for transitioning a terminal that is in the RRC_INACTIVE state of a mobile communication system to the RRC_CONNECTED state while performing a small data transmission. For example, the terminal may once again send an RRC Resume Request message to the second wireless network. For example, the second wireless network may forward an RRC Resume Request message to the first wireless network understanding the resume MAC-I validation for the terminal. For example, the first wireless network may forward the newly obtained security key to the second wireless network, together with the new NG-RAN UE XnAP ID assigned by the second wireless network that was assigned during the previous SDT process, if the validation for the corresponding terminal is successful. In this way, the second wireless network can inform the first wireless network that the terminal should transition from the SDT in RRC_INACTIVE state to RRC_CONNECTED state due to the occurrence of non-SDT data. The second wireless network may create a new bearer in addition to the previously assigned UE context for the terminal and instruct the terminal to transition to the RRC-CONNECTED state via an RRC Resume message.

For reference, the operation of the terminal (e.g., UE) described in this specification may be implemented by the apparatus of FIGS. 1 to 3 described above. For example, the terminal (e.g., UE) may be the first device 100 or the second device 200 of FIG. 2. For example, an operation of a terminal (e.g., UE) described herein may be processed by one or more processors 102 or 202 . The operation of the terminal described herein may be stored in one or more memories 104 or 204 in the form of an instruction/program (e.g., instruction, executable code) executable by one or more processors 102 or 202 . One or more processors 102 or 202 control one or more memories 104 or 204 and one or more transceivers 105 or 206, and may perform the operation of the terminal (e.g., UE) described herein by executing instructions/programs stored in one or more memories 104 or 204.

In addition, instructions for performing an operation of a terminal (e.g., UE) described in the disclosure of the present specification may be stored in a non-volatile computer-readable storage medium in which it is recorded. The storage medium may be included in one or more memories 104 or 204 . And, the instructions recorded in the storage medium may be executed by one or more processors 102 or 202 to perform the operation of the terminal (e.g., UE) described in the disclosure of the present specification.

For reference, the operation of a network node (e.g., 5GC, AMF, SMF, UPF etc.) or base station (e.g., New NG=RAN, NG-RAN, Old NG-RAN, serving gNB, last serving gNB etc.) described herein may be implemented by the apparatus of FIGS. 1 to 3 to be described below. For example, a network node or a base station may be the first device 100 of FIG.2 or the second device 200 of FIG.2. For example, the operation of a network node or base station described herein may be processed by one or more processors 102 or 202. The operation of the terminal described herein may be stored in one or more memories 104 or 204 in the form of an instruction/program (e.g., instruction, executable code) executable by one or more processors 102 or 202. One or more processors 102 or 202 may perform the operation of a network node or a base station described herein, by controlling one or more memories 104 or 204 and one or more transceivers 106 or 206 and executing instructions/programs stored in one or more memories 104 or 204.

In addition, instructions for performing the operation of the network node or base station described in the disclosure of the present specification may be stored in a non-volatile (or non-transitory) computer-readable storage medium. The storage medium may be included in one or more memories 104 or 204. And, the instructions recorded in the storage medium are executed by one or more processors 102 or 202, so that the operations of a network node or base station are performed.

In the exemplary system described above, the methods are described on the basis of a flowchart as a series of steps or blocks, but are not limited to the order of the steps described, some steps may occur in a different order or concurrent with other steps as described above. In addition, those skilled in the art will understand that the steps shown in the flowchart are not exclusive and that other steps may be included or that one or more steps of the flowchart may be deleted without affecting the scope of rights.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method.

## Claims

1. A method for a first Next Generation Radio Access Node, NG-RAN, node to perform a communication, the method comprising:
receiving, by the first NG-RAN node from a second NG-RAN node, a RETRIEVE UE CONTEXT request message comprising a first identifier, UE XnAP ID, and an Inactive Radio Network Temporary Identifier, I-RNTI;
performing, by the first NG-RAN node, a verification of a User Equipment, UE, based on the I-RNTI; and,
in response to the RETRIEVE UE CONTEXT request message, after the verification is finished, transmitting, by the first NG-RAN node to the second NG-RAN node, a response message,
wherein the response message includes a second UE XnAP ID related to the UE and a security key,
wherein the second UE XnAP ID related to the UE was assigned by the second NG-RAN node for Small Data Transmission, SDT, transmission,
wherein the second UE XnAP ID related to the UE was previously received by the first NG-RAN node from the second NG-RAN node, and
wherein the second UE XnAP ID enables the second NG-RAN node to use a UE context, which was used for the SDT transmission, for non-SDT transmission.

2. The method of claim 1,
wherein the performing the verification further comprising:
checking that a UE context for the UE can be found, based on the I-RNTI; and
determining a Resume MAC-I included in the RETRIEVE UE CONTEXT request message is valid, based on the UE context.

3. The method of claim 2, further comprising:
after the verification is performed, deriving the security key based on horizontal key derivation.

4. The method of any one of claim 1 to claim 3,
wherein the security key is used to encrypt an RRC resume message transmitted by the second NG-RAN node to the UE.

5. The method of any one of claim 1 to claim 4,
wherein the second UE XnAP ID causes the second NG-RAN node to recognize that the UE wishes to use the non-SDT transport.

6. The method of any one of claim 1 to claim 5,
wherein the response message is a RETRIEVE UE CONTEXT RESPONSE message.

7. The method of any one of claim 1 to claim 5,
wherein the response message is a RETRIEVE UE CONTEXT FAILURE message.

8. A first Next Generation Radio Access Node, NG-RAN, node performing communications comprising:
at least one transceiver;
at least one processor; and
at least one computer memory operably connectable to the at least one processor and storing instructions that, based on being executed by the at least one processor, perform operations of any one of claim 1 to claim 7.

9. A method for a first Next Generation Radio Access Node, NG-RAN, node to perform a communication, the method comprising:
receiving, by the first NG-RAN node from a user equipment, UE, an RRC Resume Request message comprising an Inactive Radio Network Temporary Identifier, I-RNTI;
transmitting, by the first NG-RAN node to a second NG-RAN node, a RETRIEVE UE CONTEXT Request message comprising a first identifier, UE XnAP ID, and the I-RNTI; and
receiving, by the first NG-RAN node from the second NG-RAN node, in response to the RETRIEVE UE CONTEXT Request message, a response message from the second NG-RAN node, wherein the response message includes a second UE XnAP ID related to the UE and a security key; and
transmitting, by the first NG-RAN node to the UE, an RRC Resume message,
wherein the second UE XnAP ID related to the UE was assigned by the first NG-RAN node for Small Data Transmission, SDT, transmission,
wherein the second UE XnAP ID related to the UE was previously transmitted by the first NG-RAN node to the second NG-RAN node, and
wherein, based on receiving the second UE XnAP ID, the UE context, which was used for the SDT transmission, is used for non-SDT transmission.

10. The method of claim 9, further comprising,
retrieving, by the first NG-RAN node, a UE context that was used for the SDT transmission, based on the second UE XnAP ID.

11. The method of claim 9 or claim 10, further comprising:
based on that the UE context used for transmitting the SDT is not found, generating, by the first NG-RAN node, a UE context for the SDT bearer based on the UE context included in the response message.

## Patentansprüche

1. Verfahren für einen ersten Funkzugangsknoten der nächsten Generation, NG-RAN,, zur Durchführung einer Kommunikation, wobei das Verfahren umfasst:
Empfangen, durch den ersten NG-RAN-Knoten von einem zweiten NG-RAN-Knoten, einer Anforderungsnachricht RETRIEVE UE CONTEXT, die eine erste Kennung, UE-XnAP-ID, und eine temporäre Kennung des inaktiven Funknetzes, I-RNTI, umfasst;
Durchführen, durch den ersten NG-RAN-Knoten, einer Verifizierung eines Benutzergeräts, UE, basierend auf der I-RNTI; und,
als Reaktion auf die Anforderungsnachricht RETRIEVE UE CONTEXT, nachdem die Verifizierung abgeschlossen ist, Senden, durch den ersten NG-RAN-Knoten an den zweiten NG-RAN-Knoten, einer Antwortnachricht,
wobei die Antwortnachricht eine zweite UE-XnAP-ID, die sich auf das UE bezieht, und einen Sicherheitsschlüssel enthält,
wobei die zweite UE-XnAP-ID, die sich auf das UE bezieht, durch den zweiten NG-RAN-Knoten für eine Übertragung kleiner Datenmengen, SDT, zugewiesen wurde,
wobei die zweite UE-XnAP-ID, die sich auf das UE bezieht, zuvor vom ersten NG-RAN-Knoten vom zweiten NG-RAN-Knoten empfangen wurde, und
wobei die zweite UE-XnAP-ID es dem zweiten NG-RAN-Knoten ermöglicht, einen UE-Kontext zu verwenden, der für die SDT-Übertragung verwendet wurde, für eine Nicht-SDT-Übertragung.

2. Verfahren nach Anspruch 1,
wobei das Durchführen der Verifizierung ferner umfasst:
Prüfen, ob ein UE-Kontext für das UE gefunden werden kann, basierend auf der I-RNTI; und
Bestimmen, dass ein Resume-MAC-I, der in der Anforderungsnachricht RETRIEVE UE CONTEXT enthalten ist, gültig ist, basierend auf dem UE-Kontext.

3. Verfahren nach Anspruch 2, ferner umfassend:
nach Durchführung der Verifizierung, Ableiten des Sicherheitsschlüssels basierend auf einer horizontalen Schlüsselableitung.

4. Verfahren nach einem der Ansprüche 1 bis 3,
wobei der Sicherheitsschlüssel verwendet wird, um eine RRC-Wiederaufnahme-Nachricht zu verschlüsseln, die vom zweiten NG-RAN-Knoten an das UE gesendet wird.

5. Verfahren nach einem der Ansprüche 1 bis 4,
wobei die zweite UE-XnAP-ID bewirkt, dass der zweite NG-RAN-Knoten erkennt, dass das UE den Nicht-SDT-Transport verwenden möchte.

6. Verfahren nach einem der Ansprüche 1 bis 5,
wobei die Antwortnachricht eine RETRIEVE UE CONTEXT RESPONSE Nachricht ist.

7. Verfahren nach einem der Ansprüche 1 bis 5,
wobei die Antwortnachricht eine RETRIEVE UE CONTEXT FAILURE Nachricht ist.

8. Erster Funkzugangsknoten der nächsten Generation, NG-RAN-, der Kommunikationen durchführt, umfassend:
mindestens einen Sendeempfänger;
mindestens einen Prozessor; und
mindestens einen Computerspeicher, der operativ mit dem mindestens einen Prozessor verbindbar ist und Anweisungen speichert, die, basierend auf ihrer Ausführung durch den mindestens einen Prozessor, Operationen nach einem der Ansprüche 1 bis 7 durchführen.

9. Verfahren für einen ersten Funkzugangsknoten der nächsten Generation, NG-RAN, zur Durchführung einer Kommunikation, wobei das Verfahren umfasst:
Empfangen, durch den ersten NG-RAN-Knoten von einem Benutzergerät, UE, einer RRC-Wiederaufnahme-Anforderungsnachricht, die eine temporäre Kennung des inaktiven Funknetzes, I-RNTI, umfasst;
Senden, durch den ersten NG-RAN-Knoten an einen zweiten NG-RAN-Knoten, einer Anforderungsnachricht RETRIEVE UE CONTEXT, die eine erste Kennung, UE-XnAP-ID, und die I-RNTI umfasst; und
Empfangen, durch den ersten NG-RAN-Knoten vom zweiten NG-RAN-Knoten, als Reaktion auf die Anforderungsnachricht RETRIEVE UE CONTEXT, einer Antwortnachricht vom zweiten NG-RAN-Knoten, wobei die Antwortnachricht eine zweite UE-XnAP-ID, die sich auf das UE bezieht, und einen Sicherheitsschlüssel enthält;
und
Senden, durch den ersten NG-RAN-Knoten an das UE, einer RRC-Wiederaufnahme-Nachricht,
wobei die zweite UE-XnAP-ID, die sich auf das UE bezieht, durch den ersten NG-RAN-Knoten für die Übertragung kleiner Datenmengen, SDT, zugewiesen wurde,
wobei die zweite UE-XnAP-ID, die sich auf das UE bezieht, zuvor vom ersten NG-RAN-Knoten an den zweiten NG-RAN-Knoten gesendet wurde, und
wobei, basierend auf dem Empfang der zweiten UE-XnAP-ID, der UE-Kontext, der für die SDT-Übertragung verwendet wurde, für eine Nicht-SDT-Übertragung verwendet wird.

10. Verfahren nach Anspruch 9, ferner umfassend,
das Abrufen, durch den ersten NG-RAN-Knoten,
eines UE-Kontexts, der für die SDT-Übertragung verwendet wurde,
basierend auf der zweiten UE-XnAP-ID.

11. Verfahren nach Anspruch 9 oder Anspruch 10, ferner umfassend:
basierend darauf, dass der für die Übertragung der SDT verwendete UE-Kontext nicht gefunden wird, Erzeugen, durch den ersten NG-RAN-Knoten, eines UE-Kontexts für den SDT-Träger basierend auf dem in der Antwortnachricht enthaltenen UE-Kontext.

## Revendications

1. Procédé permettant à un premier nœud d'accès radio de nouvelle génération, NG-RAN, de réaliser une communication, le procédé comprenant :
la réception, par le premier nœud NG-RAN en provenance d'un second nœud NG-RAN, d'un message de demande de récupération de contexte d'UE, RETRIEVE UE CONTEXT, comprenant un premier identifiant, UE XnAP ID , et un Identifiant temporaire de réseau radio inactif, I-RNTI ;
la réalisation, par le premier nœud NG-RAN, d'une vérification d'un équipement utilisateur, UE, sur la base de l'I-RNTI ; et,
en réponse au message de demande RETRIEVE UE CONTEXT, après que la vérification est terminée, la transmission, par le premier nœud NG-RAN au second nœud NG-RAN, d'un message de réponse,
dans lequel le message de réponse inclut un second identifiant UE XnAP ID associé à l'UE et une clé de sécurité,
dans lequel le second identifiant UE XnAP ID associé à l'UE a été attribué par le second nœud NG-RAN pour une transmission de petites données, SDT,
dans lequel le second identifiant UE XnAP ID associé à l'UE a été précédemment reçu par le premier nœud NG-RAN en provenance du second nœud NG-RAN, et
dans lequel le second identifiant UE XnAP ID permet au second nœud NG-RAN d'utiliser un contexte d'UE, qui a été utilisé pour la transmission SDT, pour une transmission non-SDT.

2. Procédé selon la revendication 1,
dans lequel la réalisation de la vérification comprend en outre :
la vérification qu'un contexte d'UE pour l'UE peut être trouvé, sur la base de l'I-RNTI ; et
la détermination qu'un MAC-I de reprise inclus dans le message de demande RETRIEVE UE CONTEXT est valide, sur la base du contexte d'UE.

3. Procédé selon la revendication 2, comprenant en outre :
après que la vérification a été réalisée, la dérivation de la clé de sécurité sur la base d'une dérivation de clé horizontale.

4. Procédé selon l'une quelconque des revendications 1 à 3,
dans lequel la clé de sécurité est utilisée pour chiffrer un message de reprise RRC transmis par le second nœud NG-RAN à l'UE.

5. Procédé selon l'une quelconque des revendications 1 à 4,
dans lequel le second identifiant UE XnAP ID amène le second nœud NG-RAN à reconnaître que l'UE souhaite utiliser le transport non-SDT.

6. Procédé selon l'une quelconque des revendications 1 à 5,
dans lequel le message de réponse est un message de réponse de récupération de contexte d'UE, RETRIEVE UE CONTEXT RESPONSE.

7. Procédé selon l'une quelconque des revendications 1 à 5,
dans lequel le message de réponse est un message d'échec de récupération de contexte d'UE, RETRIEVE UE CONTEXT FAILURE.

8. Premier nœud d'accès radio de nouvelle génération, NG-RAN, réalisant des communications, comprenant :
au moins un émetteur-récepteur ;
au moins un processeur ; et
au moins une mémoire d'ordinateur connectable de manière fonctionnelle à l'au moins un processeur et stockant des instructions qui, sur la base de leur exécution par l'au moins un processeur, réalisent des opérations de l'une quelconque des revendications 1 à 7.

9. Procédé permettant à un premier nœud d'accès radio de nouvelle génération, NG-RAN, de réaliser une communication, le procédé comprenant :
la réception, par le premier nœud NG-RAN en provenance d'un équipement utilisateur, UE, d'un message de demande de reprise RRC comprenant un Identifiant temporaire de réseau radio inactif, I-RNTI ;
la transmission, par le premier nœud NG-RAN à un second nœud NG-RAN, d'un message de demande de récupération de contexte d'UE, RETRIEVE UE CONTEXT, comprenant un premier identifiant, UE XnAP ID, et l'I-RNTI ; et
la réception, par le premier nœud NG-RAN en provenance du second nœud NG-RAN, en réponse au message de demande RETRIEVE UE CONTEXT, d'un message de réponse provenant du second nœud NG-RAN, dans lequel le message de réponse inclut un second identifiant UE XnAP ID associé à l'UE et une clé de sécurité ;
et
la transmission, par le premier nœud NG-RAN à l'UE, d'un message de reprise RRC,
dans lequel le second identifiant UE XnAP ID associé à l'UE a été attribué par le premier nœud NG-RAN pour une transmission de petites données, SDT,
dans lequel le second identifiant UE XnAP ID associé à l'UE a été précédemment transmis par le premier nœud NG-RAN au second nœud NG-RAN, et
dans lequel, sur la base de la réception du second identifiant UE XnAP ID , le contexte d'UE, qui a été utilisé pour la transmission SDT, est utilisé pour une transmission non-SDT.

10. Procédé selon la revendication 9, comprenant en outre,
la récupération, par le premier nœud NG-RAN, d'un contexte d'UE qui a été utilisé pour la transmission SDT, sur la base du second identifiant UE XnAP ID.

11. Procédé selon la revendication 9 ou la revendication 10, comprenant en outre :
sur la base du fait que le contexte d'UE utilisé pour transmettre la SDT n'est pas trouvé, la génération, par le premier nœud NG-RAN, d'un contexte d'UE pour le support SDT sur la base du contexte d'UE inclus dans le message de réponse.
